# EUROPEAN PATENT APPLICATION

(11) **EP 4 030 650 A1**
(43) Date of publication of application: **20.07.2022**
(21) Application number: 19946524.6
(22) Date of filing: 29.09.2019
(51) Int. Cl.: H04L 1/00

(54) **DATA TRANSMISSION METHOD AND APPARATUS**

(71) Applicant: Huawei Technologies Co., Ltd., Longgang District Shenzhen, Guangdong 518129 (CN)
(72) Inventor: FAN, Qiang, Shenzhen, Guangdong 518129 (CN); HUANG, Qufang, Shenzhen, Guangdong 518129 (CN); LOU, Chong, Shenzhen, Guangdong 518129 (CN)
(74) Representative: Goddar, Heinz J.
(86) International application number: PCT/CN2019/109242
(87) International publication number: WO 2021/056589

(57) **Abstract**

A data transmission method and an apparatus are provided. The method includes: If determining that transmission of a first data packet fails, a first communication apparatus sends P data packets after the first data packet in a second transmission manner, where P is an integer greater than or equal to 1. Transmission reliability corresponding to the second transmission manner is greater than transmission reliability corresponding to a first transmission manner, and the first transmission manner is used by the first communication apparatus to send the first data packet. In this way, because the first communication apparatus sends the P data packets after the first data packet in the second transmission manner, transmission reliability of the P data packets is improved, so that successful transmission of the P data packets can be effectively ensured, and service interruption can be avoided. In addition, compared with a manner of improving transmission reliability of all data packets, in this solution, only the transmission reliability of the P data packets needs to be improved, so that resource overheads can be effectively reduced.

## Description

### TECHNICAL FIELD

This application relates to the field of wireless communication technologies, and in particular, to a data transmission method and an apparatus.

### BACKGROUND

In a scenario such as industrial manufacturing, a wired industrial network is usually deployed to control a production line. For example, wired time sensitive networking (time sensitive networking, TSN) is deployed. However, there are some inherent disadvantages of using a wired mode, such as high cable deployment costs, a security risk, and low flexibility. If a wireless mode is used to replace the wired mode, especially on the last hop of a TSN, the foregoing problems can be effectively avoided.

Currently, a solution of a 5th generation (5th generation, 5G) system (system) (referred to as a 5GS) supporting TSN with industrial network applications is being discussed in the 3rd generation partnership project (3rd generation partnership project, 3GPP). For the TSN, the 5GS may be considered as a TSN bridging device. Data packets of various industrial applications can be sent on an uplink or a downlink through the 5GS. Data of an industrial application may be sent by a data network (data network) (for example, a controller (controller)) to a user plane function (user plane function, UPF) entity, then sent by the UPF entity to a terminal device connected to an industrial device (for example, a sensor or an operating arm), and sent by the terminal device to the connected industrial device. Similarly, the industrial data may also be sent by the industrial device to the data network.

To prevent occasional communication errors on a network layer from affecting an application layer of an industrial application, survival time (survival time) is set on the application layer. If the application layer does not receive a data packet in a time range in which the data packet is expected to arrive, a survival time timer is started. If an expected data packet arrives on the application layer in a running process of the timer, the timer stops. If the timer keeps running until expiration, to be specific, no expected data packet arrives on the application layer in a time period in which the survival time timer is active, interruption occurs on the application layer. This may affect a normal service on the application layer. Therefore, how to avoid interruption on the application layer still needs to be further researched.

### SUMMARY

In view of this, this application provides a data transmission method and an apparatus, to avoid service interruption.

According to a first aspect, an embodiment of this application provides a data transmission method. The method may be applied to a CU, or may be applied to a chip inside the CU. In the method, if determining that transmission of a first data packet fails, the CU sends P data packets after the first data packet in a second transmission manner, where P is an integer greater than or equal to 1; and transmission reliability corresponding to the second transmission manner is greater than transmission reliability corresponding to a first transmission manner, and the first transmission manner is used by the CU to send the first data packet.

In a possible design, the CU may determine, in any one of the following manners, that the transmission of the first data packet fails. For example, in Manner 1, the CU receives a second data packet from a user plane function UPF entity at a first moment, and if not receiving the first data packet within a first time period after the first moment, the CU determines that the transmission of the first data packet fails, where a first sequence number of the second data packet is adjacent to a first sequence number of the first data packet. In Manner 2, if determining that a first sequence number of a data packet received from a UPF entity is missing and the missing first sequence number corresponds to the first data packet, the CU determines that the transmission of the first data packet fails. In Manner 3, if not receiving the first data packet in an arrival time range of the first data packet, the CU determines that the transmission of the first data packet fails. In Manner 4, the CU sends the first data packet in the first transmission manner, and if receiving first feedback information sent by a terminal device, the CU determines that the transmission of the first data packet fails, where the first feedback information is used to indicate that the transmission of the first data packet fails. In Manner 5, the CU sends the first data packet in the first transmission manner, and if receiving indication information sent by a distributed unit DU connected to the CU, the CU determines that the transmission of the first data packet fails, where the indication information is used to indicate that the transmission of the first data packet fails.

In the foregoing Manner 1 and Manner 2, the CU may determine, based on a first sequence number of a data packet, whether transmission of the data packet fails. Because the first sequence number is content carried in the data packet, implementation of determining is simple and convenient. In Manner 4 and Manner 5, the CU may determine, based on the first feedback information of the terminal device or the indication information of the DU, that transmission of the data packet fails, so that a processing burden of the CU can be reduced.

In a possible design, the first feedback information is feedback information from a PDCP layer.

In a possible design, a DRB used to transmit the P data packets is associated with W logical channels, and W is an integer greater than or equal to 2. For example, the first transmission manner corresponds to M logical channels in the W logical channels, the second transmission manner corresponds to N logical channels in the W logical channels, M and N are integers greater than or equal to 1, and N is greater than M. In this case, that the CU sends P data packets after the first data packet in a second transmission manner includes: The CU sends the P data packets through the N logical channels. For another example, the first transmission manner corresponds to a first logical channel in the W logical channels, and the second transmission manner corresponds to a second logical channel in the W logical channels. In this case, that the CU sends P data packets after the first data packet in a second transmission manner includes: The CU sends the P data packets through the second logical channel.

According to a second aspect, an embodiment of this application provides a data transmission method. The method may be applied to a DU, or may be applied to a chip inside the DU. In the method, if determining that transmission of a first data packet fails, the DU sends P data packets after the first data packet in a second transmission manner, where P is an integer greater than or equal to 1; and transmission reliability corresponding to the second transmission manner is greater than transmission reliability corresponding to a first transmission manner, and the first transmission manner is used by the DU to send the first data packet.

In a possible design, the DU may determine, in the following manner, that the transmission of the first data packet fails: The DU sends the first data packet in the first transmission manner, and if receiving second feedback information sent by a terminal device, the DU determines that the transmission of the first data packet fails, where the second feedback information is used to indicate that the transmission of the first data packet fails.

In a possible design, the second feedback information is feedback information from an RLC layer or HARQ feedback information.

In a possible design, the first transmission manner corresponds to a first transmission parameter, and the second transmission manner corresponds to a second transmission parameter. That the DU sends P data packets after the first data packet in a second transmission manner includes: The DU sends the P data packets by using the second transmission parameter.

According to a third aspect, an embodiment of this application provides a data transmission method. The method may be applied to a first terminal device, or may be applied to a chip inside the first terminal device. In the method, if determining that transmission of a first data packet fails, the first terminal device sends P data packets after the first data packet in a second transmission manner, where P is an integer greater than or equal to 1; and transmission reliability corresponding to the second transmission manner is greater than transmission reliability corresponding to a first transmission manner, and the first transmission manner is used by the first terminal device to send the first data packet.

In a possible design, the first terminal device may determine, in any one of the following manners, that the transmission of the first data packet fails. For example, in Manner 1, the first terminal device sends the first data packet in the first transmission manner, and if receiving third feedback information sent by a second communication apparatus, the first terminal device determines that the transmission of the first data packet fails, where the third feedback information is used to indicate that the transmission of the first data packet fails. In Manner 2, the first terminal device sends the first data packet in the first transmission manner, and if not receiving, within a third time period, fourth feedback information sent by a second communication apparatus, the first terminal device determines that the transmission of the first data packet fails, where the fourth feedback information is used to indicate that the transmission of the first data packet succeeds. In Manner 3, the first terminal device sends the first data packet in the first transmission manner, and if receiving the 1^{st} piece of downlink control information DCI to the K^{th} piece of DCI that are sent by a second communication apparatus, the first terminal device determines that the transmission of the first data packet fails, where the 1^{st} piece of DCI to the K^{th} piece of DCI are used to schedule the first data packet, and K is an integer greater than or equal to 1.

In a possible design, the third feedback information or the fourth feedback information is feedback information from a PDCP layer, feedback information from an RLC layer, or HARQ feedback information.

In a possible design, the second communication apparatus is a network device, or the second communication apparatus is a second terminal device.

In a possible design, a DRB used to transmit the P data packets is associated with W logical channels, and W is an integer greater than or equal to 1. For example, the first transmission manner corresponds to M logical channels in the W logical channels, the second transmission manner corresponds to N logical channels in the W logical channels, M and N are integers greater than or equal to 1, and N is greater than M. In this case, that the first terminal device sends P data packets after the first data packet in a second transmission manner includes: The first terminal device sends the P data packets through the N logical channels. For another example, the first transmission manner corresponds to a first logical channel in the W logical channels, and the second transmission manner corresponds to a second logical channel in the W logical channels. In this case, that the first communication apparatus sends P data packets after the first data packet in a second transmission manner includes: The first terminal device sends the P data packets through the second logical channel. For another example, the W logical channels include a third logical channel, the first transmission manner corresponds to a first transmission parameter of the third logical channel, and the second transmission manner corresponds to a second transmission parameter of the third logical channel. In this case, that the first terminal device sends P data packets after the first data packet in a second transmission manner includes: The first terminal device sends the P data packets by using the second transmission parameter of the third logical channel.

The P data packets described in the first aspect, the second aspect, or the third aspect may be data packets sent in a second time period.

In the first aspect to the third aspect, the first communication apparatus (for example, the CU, the DU, or the first terminal device) sends the P data packets after the first data packet in the second transmission manner, to be specific, transmission reliability of the P data packets is improved, so that successful transmission of the P data packets can be effectively ensured, and service interruption can be avoided. In addition, compared with a manner of improving transmission reliability of all data packets, in this solution, only the transmission reliability of the P data packets needs to be improved, so that resource overheads can be effectively reduced.

According to a fourth aspect, an embodiment of this application provides a data transmission method. The method may be applied to a CU, or may be applied to a chip inside the CU. In the method, if determining that transmission of a first data packet fails, the CU sends first information to a DU, where the first information is used to indicate to send P data packets after the first data packet in a second transmission manner; and transmission reliability corresponding to the second transmission manner is greater than transmission reliability corresponding to a first transmission manner, and the first transmission manner is used by a second communication apparatus to send the first data packet.

In a possible design, the CU may determine, in any one of Manner 1 to Manner 5 described in the first aspect, that the transmission of the first data packet fails.

In a possible design, the first information includes at least one of the following: a second transmission parameter corresponding to the second transmission manner or an index of the second transmission parameter; a second sequence number and/or a third sequence number of the first data packet; a value of P; and duration of a second time period, where the P data packets are data packets sent in the second time period.

In a possible design, the P data packets include a third data packet, the first information includes indication information corresponding to the third data packet, and the indication information corresponding to the third data packet is used to indicate to send the third data packet in the second transmission manner. That the CU sends first information to a DU includes: The CU sends the third data packet to the DU, where the third data packet includes the indication information corresponding to the third data packet.

Compared with a manner in which the first information is separately sent by using an F1-U interface message, in this manner, the CU may add an indication field to the P data packets delivered to the DU, so that signaling overheads can be effectively reduced.

In a possible design, the indication information corresponding to the third data packet includes a second transmission parameter corresponding to the second transmission manner or an index of the second transmission parameter.

According to a fifth aspect, an embodiment of this application provides a data transmission method. The method may be applied to a DU, or may be applied to a chip inside the DU. In the method, if determining that transmission of a first data packet fails, the DU sends first information to a terminal device, where the first information is used to indicate to send P data packets after the first data packet in a second transmission manner; and transmission reliability corresponding to the second transmission manner is greater than transmission reliability corresponding to a first transmission manner, and the first transmission manner is used by a second communication apparatus to send the first data packet.

In a possible design, the DU may determine, in any one of the following manners, that the transmission of the first data packet fails. For example, in Manner 1, the DU receives a second data packet from the terminal device at a first moment, and if not receiving the first data packet within a first time period after the first moment, the DU determines that the transmission of the first data packet fails, where a fourth sequence number of the second data packet is adjacent to a fourth sequence number of the first data packet, and the fourth sequence number of the second data packet is less than the fourth sequence number of the first data packet. In Manner 2, if determining that a fourth sequence number of a data packet received from the terminal device is missing and the missing fourth sequence number corresponds to the first data packet, the DU determines that the transmission of the first data packet fails. In Manner 3, if not receiving the first data packet in an arrival time range of the first data packet, the DU determines that the transmission of the first data packet fails.

In a possible design, the first information includes at least one of the following: a quantity of logical channels corresponding to the second transmission manner; an identifier of a logical channel corresponding to the second transmission manner; a second transmission parameter of a logical channel corresponding to the second transmission manner or an index of the second transmission parameter; a fourth sequence number of the first data packet; a value of P; and duration of a second time period, where the P data packets are data packets sent in the second time period.

In a possible design, that the DU sends first information to a terminal device includes: The DU sends physical layer control signaling or media access control MAC layer control signaling to the terminal device, where the physical layer control signaling or the MAC layer control signaling includes the first information.

In a possible design, the physical layer control signaling is the 1^{st} piece of DCI to the K^{th} piece of DCI used to schedule a retransmission of the first data packet, where K is an integer greater than or equal to 1.

According to a sixth aspect, an embodiment of this application provides a data transmission method. The method may be applied to a first network device, or may be applied to a chip inside the first network device. In the method, if determining that transmission of a first data packet fails, the first network device sends first information to a second network device, where the first information is used to indicate to send P data packets after the first data packet in a second transmission manner; and transmission reliability corresponding to the second transmission manner is greater than transmission reliability corresponding to a first transmission manner, and the first transmission manner is used by a second communication apparatus to send the first data packet.

In a possible design, the first communication apparatus may determine, in any one of the following manners, that the transmission of the first data packet fails. For example, in Manner 1, the first network device receives a second data packet from a UPF entity at a first moment, and if not receiving the first data packet within a first time period after the first moment, the first network device determines that the transmission of the first data packet fails, where a first sequence number of the second data packet is adjacent to a first sequence number of the first data packet. In Manner 2, if determining that a first sequence number of a data packet received from a UPF entity is missing, and the missing first sequence number corresponds to the first data packet, the first network device determines that the transmission of the first data packet fails. In Manner 3, if not receiving the first data packet in an arrival time range of the first data packet, the first network device determines that the transmission of the first data packet fails.

In a possible design, the first information may include an identifier of a tunnel address between the first network device and the UPF entity and/or an identifier of a tunnel address between the second network device and the UPF entity.

In a possible design, the first information further includes at least one of the following: a first sequence number corresponding to the first data packet; a quantity of logical channels corresponding to the second transmission manner; an identifier of a logical channel corresponding to the second transmission manner; a second transmission parameter of a logical channel corresponding to the second transmission manner or an index of the second transmission parameter; a value of P; and duration of a second time period, where the P data packets are data packets sent in the second time period.

According to a seventh aspect, an embodiment of this application provides a data transmission method. The method may be applied to a DU, or may be applied to a chip inside the DU. In the method, the DU receives first information sent by a CU, where the first information is used to indicate to send P data packets after a first data packet in a second transmission manner, and the first data packet is a data packet whose transmission fails. Further, the DU sends the P data packets in the second transmission manner. Transmission reliability corresponding to the second transmission manner is greater than transmission reliability corresponding to a first transmission manner, and the first transmission manner is used by the DU to send the first data packet.

In a possible design, the first information includes at least one of the following: a second transmission parameter corresponding to the second transmission manner or an index of the second transmission parameter; a second sequence number and/or a third sequence number of the first data packet; a value of P; and duration of a second time period, where the P data packets are data packets sent in the second time period.

In a possible design, the P data packets include a third data packet, the first information includes indication information corresponding to the third data packet, and the indication information corresponding to the third data packet is used to indicate to send the third data packet in the second transmission manner. That the DU receives the first information sent by the CU includes: The DU receives the third data packet sent by the CU, where the third data packet includes indication information corresponding to the third data packet.

In a possible design, the indication information corresponding to the third data packet includes the second transmission parameter corresponding to the second transmission manner or the index of the second transmission parameter.

According to an eighth aspect, an embodiment of this application provides a data transmission method. The method may be applied to a terminal device, or may be applied to a chip inside the terminal device. In the method, the terminal device receives first information sent by a DU, where the first information is used to indicate to send P data packets after a first data packet in a second transmission manner, and the first data packet is a data packet whose transmission fails. Further, the terminal device sends the P data packets in the second transmission manner. Transmission reliability corresponding to the second transmission manner is greater than transmission reliability corresponding to a first transmission manner, and the first transmission manner is used by the terminal device to send the first data packet.

In a possible design, the first information includes at least one of the following: a quantity of logical channels corresponding to the second transmission manner; an identifier of a logical channel corresponding to the second transmission manner; a second transmission parameter of a logical channel corresponding to the second transmission manner or an index of the second transmission parameter; a fourth sequence number of the first data packet; a value of P; and duration of a second time period, where the P data packets are data packets sent in the second time period.

In a possible design, that the terminal device receives first information sent by a DU includes: The terminal device receives physical layer control signaling or MAC layer control signaling sent by the DU, where the physical layer control signaling or the MAC layer control signaling includes the first information.

In a possible design, the physical layer control signaling is the 1^{st} piece of DCI to the K^{th} piece of DCI used to schedule a retransmission of the first data packet, where K is an integer greater than or equal to 1.

According to a ninth aspect, an embodiment of this application provides a data transmission method. The method may be applied to a second network device, or may be applied to a chip inside the second network device. In the method, the second network device receives first information sent by a first network device, where the first information is used to indicate to send P data packets after a first data packet in a second transmission manner, and the first data packet is a data packet whose transmission fails. Further, the second network device sends the P data packets in the second transmission manner. Transmission reliability corresponding to the second transmission manner is greater than transmission reliability corresponding to a first transmission manner, and the first transmission manner is used by the second network device to send the first data packet.

In a possible design, the first information includes an identifier of a tunnel address between the first network device and a UPF entity and/or an identifier of a tunnel address between the second network device and the UPF entity.

In a possible design, the first information further includes at least one of the following: a first sequence number corresponding to the first data packet; a quantity of logical channels corresponding to the second transmission manner; an identifier of a logical channel corresponding to the second transmission manner; a second transmission parameter of a logical channel corresponding to the second transmission manner or an index of the second transmission parameter; a value of P; and duration of a second time period, where the P data packets are data packets sent in the second time period.

In the fourth aspect to the ninth aspect, the first communication apparatus indicates the second communication apparatus to send the P data packets after the first data packet in the second transmission manner, so that the second communication apparatus can improve transmission reliability of the P data packets, to effectively ensure successful transmission of the P data packets, and avoid service interruption. In addition, compared with a manner of improving transmission reliability of all data packets, in this solution, only the transmission reliability of the P data packets needs to be improved, so that resource overheads can be effectively reduced.

According to a tenth aspect, an embodiment of this application provides an apparatus, including units or means (means) configured to perform the steps included in any design of the first aspect or the fourth aspect.

According to an eleventh aspect, an embodiment of this application provides an apparatus, including units or means configured to perform the steps included in any design of the second aspect, the fifth aspect, or the seventh aspect.

According to a twelfth aspect, an embodiment of this application provides an apparatus, including units or means configured to perform the steps included in any design of the third aspect or the eighth aspect.

According to a thirteenth aspect, an embodiment of this application provides an apparatus, including units or means configured to perform the steps included in any design of the sixth aspect or the ninth aspect.

According to a fourteenth aspect, an embodiment of this application provides an apparatus, including at least one processor and a memory, where the at least one processor is configured to perform the method provided in any design of the first aspect or the fourth aspect.

According to a fifteenth aspect, an embodiment of this application provides an apparatus, including at least one processor and a memory, where the at least one processor is configured to perform the method provided in any design of the second aspect, the fifth aspect, or the seventh aspect.

According to a sixteenth aspect, an embodiment of this application provides an apparatus, including at least one processor and a memory, where the at least one processor is configured to perform the method provided in any design of the third aspect or the eighth aspect.

According to a seventeenth aspect, an embodiment of this application provides an apparatus, including at least one processor and a memory, where the at least one processor is configured to perform the method provided in any design of the sixth aspect or the ninth aspect.

According to an eighteenth aspect, an embodiment of this application provides an apparatus, including at least one processor and an interface circuit, where the at least one processor is configured to perform the method provided in any design of the first aspect or the fourth aspect.

According to a nineteenth aspect, an embodiment of this application provides an apparatus, including at least one processor and an interface circuit, where the at least one processor is configured to perform the method provided in any design of the second aspect, the fifth aspect, or the seventh aspect.

According to a twentieth aspect, an embodiment of this application provides an apparatus, including at least one processor and an interface circuit, where the at least one processor is configured to perform the method provided in any design of the third aspect or the eighth aspect.

According to a twenty-first aspect, an embodiment of this application provides an apparatus, including at least one processor and an interface circuit, where the at least one processor is configured to perform the method provided in any design of the sixth aspect or the ninth aspect.

According to a twenty-second aspect, an embodiment of this application provides a program. When executed by a processor, the program is used to perform the method provided in any design of the first aspect to the ninth aspect.

According to a twenty-third aspect, an embodiment of this application provides a program product, for example, a computer-readable storage medium. When a computer reads and executes the program product, the computer is enabled to perform the method provided in any design of the first aspect to the ninth aspect.

The processing apparatus may be a chip. The processor may be implemented by hardware, or may be implemented by software. When implemented by the hardware, the processor may be a logic circuit, an integrated circuit, or the like. When implemented by the software, the processor may be a general-purpose processor. The general-purpose processor is implemented by reading software code stored in a memory. The memory may be integrated into the processor, may be located outside the processor, or may exist independently.

There are one or more processors, and there are one or more memories.

The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in the embodiments of this application.

### BRIEF DESCRIPTION OF DRAWINGS

FIG. 1a is a schematic diagram of a possible network architecture to which an embodiment of this application is applicable;
FIG. 1b is a schematic diagram of another possible network architecture to which an embodiment of this application is applicable;
FIG. 1c is a schematic diagram of still another possible network architecture to which an embodiment of this application is applicable;
FIG. 2 is a schematic diagram of still another possible network architecture to which an embodiment of this application is applicable;
FIG. 3 is a schematic diagram of still another network architecture to which an embodiment of this application is applicable;
FIG. 4a is a schematic diagram of a possible transmission process of a downlink data packet according to an embodiment of this application;
FIG. 4b is a schematic diagram of a possible transmission process of an uplink data packet according to an embodiment of this application;
FIG. 4c is a schematic diagram of possible data transmission between a first terminal device and a second terminal device according to an embodiment of this application;
FIG. 4d is a schematic diagram of repeated transmission according to an embodiment of this application;
FIG. 5 is a schematic diagram of survival time according to an embodiment of this application;
FIG. 6 is a schematic flowchart corresponding to a data transmission method according to Embodiment 1 of this application;
FIG. 7 is a schematic flowchart corresponding to a data transmission method according to Embodiment 2 of this application;
FIG. 8 is a possible example block diagram of an apparatus according to an embodiment of this application;
FIG. 9 is a schematic diagram of a structure of a network device according to an embodiment of this application;
FIG. 10 is a schematic diagram of a structure of another network device according to an embodiment of this application; and
FIG. 11 is a schematic diagram of a structure of a terminal device according to an embodiment of this application.

### DESCRIPTION OF EMBODIMENTS

To make objectives, technical solutions, and advantages of embodiments of this application clearer, the following further describes the embodiments of this application in detail with reference to the accompanying drawings.

Some terms in the embodiments of this application are first described, to help a person skilled in the art have a better understanding.
(1) A terminal device may be a wireless terminal device that can receive scheduling and indication information from a network device. The wireless terminal device may be a device that provides a user with voice and/or data connectivity, a handheld device with a wireless connection function, or another processing device connected to a wireless modem. The terminal device may communicate with one or more core networks or the Internet through a radio access network (for example, a radio access network, RAN). The terminal device may be a mobile terminal device such as a mobile phone (or referred to as a "cellular" phone, mobile phone (mobile phone)), a computer, or a data card. For example, the terminal device may be a portable, pocket-sized, handheld, computer built-in, or vehicle-mounted mobile apparatus that exchanges a language and/or data with the radio access network. For example, the device may be a personal communications service (personal communications service, PCS) phone, a cordless phone, a session initiation protocol (SIP) phone, a wireless local loop (wireless local loop, WLL) station, a personal digital assistant (personal digital assistant, PDA), a tablet computer (Pad), a computer having a wireless transceiver function, or the like. The wireless terminal device may also be referred to as a system, a subscriber unit (subscriber unit), a subscriber station (subscriber station), a mobile station (mobile station, MS), a remote station (remote station), an access point (access point, AP), a remote terminal (remote terminal), an access terminal (access terminal), a user terminal (user terminal), a user agent (user agent), a subscriber station (subscriber station, SS), a customer premises equipment (customer premises equipment, CPE), a terminal (terminal), a user equipment (user equipment, UE), a mobile terminal (mobile terminal, MT), or the like. Alternatively, the terminal device may be a wearable device or a terminal device in a next-generation communication system, for example, a 5G communication system or a future evolved public land mobile network (public land mobile network, PLMN).
(2) A network device is a device in a wireless network. For example, the network device may be a radio access network (radio access network, RAN) node (or device) that enables a terminal to access a wireless network, and may also be referred to as a base station. Currently, some RAN devices are, for example, a new generation NodeB (generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB or a home NodeB (HNB)), a baseband unit (baseband unit, BBU), a wireless fidelity (wireless fidelity, Wi-Fi) access point (access point, AP), a road side unit (road side unit, RSU), an access point in an integrated access and backhaul (integrated access and backhaul, IAB) system, a control node and a terminal node in a TSN, and the like. In addition, in a network structure, the network device may include a centralized unit (centralized unit, CU) node, a distributed unit (distributed unit, DU) node, or a RAN device including a CU node and a DU node. In addition, in another possible case, the network device may be another apparatus that provides a wireless communication function for a terminal device. A specific technology and a specific device form that are used by the network device are not limited in the embodiments of this application. For ease of description, in this embodiment of this application, an apparatus that provides a wireless communication function for the terminal device is referred to as the network device.
(3) The terms "system" and "network" may be interchangeably used in the embodiments of this application. "At least one" means one or more, and "a plurality of" means two or more. The term "and/or" describes an association relationship for describing associated objects and represents that three relationships may exist. For example, A and/or B may indicate the following cases: A exists alone, both A and B exist, and B exists alone, where A and B may be singular or plural. The character "/" generally represents an "or" relationship between the associated objects. The term "at least one of the following (items)" or a similar term refers to any combination of those items, including any combination of singular item or plural items. For example, "at least one of A, B, and C" includes A, B, C, AB, AC, BC, or ABC.

In addition, unless otherwise stated, ordinal numbers such as "first" and "second" in the embodiments of this application are used to distinguish between a plurality of objects, and not used to limit an order, a time sequence, priorities, or importance of the plurality of objects. For example, first information and second information are merely intended to distinguish between different information, but do not indicate that the two types of information are different in a priority, importance, or the like.

The following further describes the technical solutions of this application in detail with reference to the accompanying drawings of this specification.

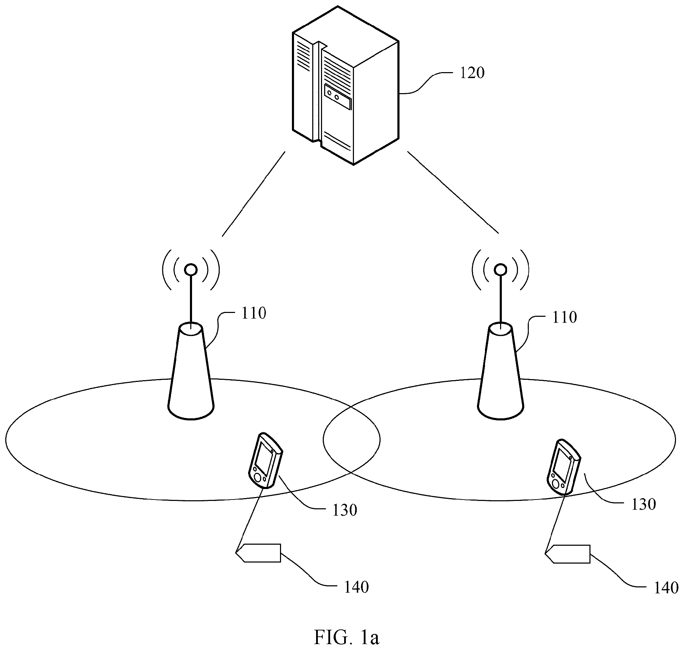

FIG. 1a is a schematic diagram of a network architecture to which an embodiment of this application is applicable. As shown in FIG. 1a, the network architecture may include a RAN device 110, a CN device 120, a terminal device 130, and an industrial device 140. The terminal device 130 may access a wireless network. The wireless network includes the radio access network (radio access network, RAN) device 110 and the core network (core network, CN) device 120. The RAN device 110 is configured to enable the terminal device 130 to access the wireless network. The CN device 120 is configured to manage the terminal device and provide a gateway for communicating with an external network. The industrial device 140 may be connected to the terminal device 130, to obtain a service of the external network (for example, a data network) through the wireless network accessed by the terminal device 130, or communicate with another device through the wireless network. For example, the industrial device 140 may be connected to the terminal device 130 in a wired manner or a wireless manner. This is not specifically limited.

The CN may include a plurality of CN devices 120. When the network architecture shown in FIG. 1a is applicable to a 5G communication system, the CN device 120 may be an access and mobility management function (access and mobility management function, AMF) entity, a session management function (session management function, SMF) entity, a UPF entity, or the like. When the network architecture shown in FIG. 1a is applicable to an LTE communication system, the CN device 120 may be a mobility management entity (mobility management entity, MME), a serving gateway (serving gateway, S-GW), or the like.

For example, an interface between the UPF entity and the RAN device may be referred to as an N3 interface, and an interface between the RAN device and the terminal device may be a Uu interface (or referred to as an air interface). Certainly, in the future communication, names of these interfaces may be unchanged, or may be replaced with other names. This is not limited in this application.

It should be understood that a quantity of devices in the communication system shown in FIG. 1a is merely used as an example, and this embodiment of this application is not limited thereto. In actual application, the communication system may further include more industrial devices 140, more terminal devices 130, and more RAN devices 110, and may further include another device.

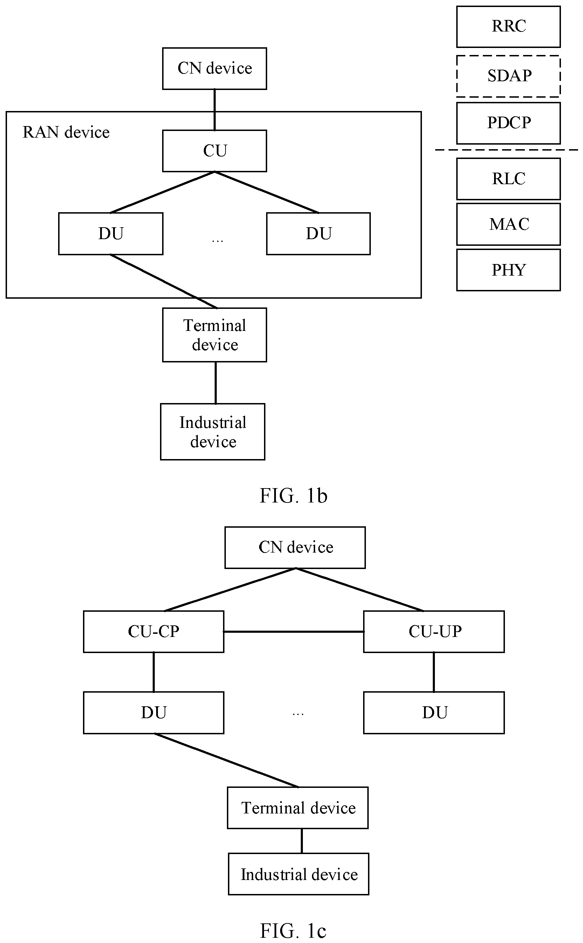

Based on FIG. 1a, FIG. 1b is a schematic diagram of still another network architecture to which an embodiment of this application is applicable. As shown in FIG. 1b, the network architecture includes a CN device, a RAN device, a terminal device, and an industrial device. The RAN device includes a baseband apparatus and a radio frequency apparatus. The baseband apparatus may be implemented by one node, or may be implemented by a plurality of nodes. The radio frequency apparatus may be independently implemented remotely from the baseband apparatus, or may be integrated into the baseband apparatus, or some remote parts are integrated into the baseband apparatus. For example, in an LTE communication system, a RAN device (an eNB) includes a baseband apparatus and a radio frequency apparatus. The radio frequency apparatus may be remotely disposed relative to the baseband apparatus. For example, a remote radio unit (remote radio unit, RRU) is remotely disposed relative to a BBU.

Communication between the RAN device and the terminal device complies with a specific protocol layer structure. For example, a control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. A user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

The RAN device may implement functions of the protocol layers such as the RRC, SDAP, PDCP, RLC, and MAC layer by using one node or a plurality of nodes. For example, in an evolved structure, the RAN device may include a CU and DU, and a plurality of DUs may be all controlled by one CU. In an example, an interface between the CU and the DU may be referred to as an F1-U interface. As shown in FIG. 1b, the CU and the DU may be divided based on a protocol layer of a wireless network. For example, functions of both the PDCP layer and a layer above the PDCP layer are deployed on the CU, and functions of protocol layers below the PDCP layer, such as the RLC layer and the MAC layer, are deployed on the DU.

Division based on the protocol layer is merely an example, and division may alternatively be performed based on another protocol layer, such as the RLC layer. Functions of both the RLC layer and a protocol layer above the RLC layer are set on the CU, and a function of a protocol layer below the RLC layer is set on the DU. Alternatively, division is performed at a protocol layer. For example, some functions of the RLC layer and a function of a protocol layer above the RLC layer are set on the CU, and a remaining function of the RLC layer and a function of a protocol layer below the RLC layer are set on the DU. In addition, division may alternatively be performed in another manner. For example, division is performed based on a latency. A function whose processing time needs to meet a latency requirement is set on the DU, and a function whose processing time does not need to meet the latency requirement is set on the CU.

In addition, the radio frequency apparatus may be not placed in the DU but is placed remotely from the DU, or may be integrated into the DU, or a part is placed remotely from the DU and a remaining part is integrated into the DU. This is not limited herein.

Based on FIG. 1b, FIG. 1c is a schematic diagram of still another network architecture to which an embodiment of this application is applicable. Compared with the network architecture shown in FIG. 1b, in FIG. 1c, a control plane (control plane, CP) and a user plane (user plane, UP) of a CU may be further separated and implemented by different entities: a control plane CU entity (namely, a CU-CP entity) and a user plane CU entity (namely, a CU-UP entity).

In the foregoing network architecture, signaling generated by the CU may be sent to the terminal device via the DU, or signaling generated by the terminal device may be sent to the CU via the DU. The DU may transparently transmit the signaling to the terminal device or the CU by directly encapsulating the signaling at a protocol layer without parsing the signaling. In the following embodiments, if transmission of such signaling between the DU and the terminal device is included, that the DU sends or receives the signaling includes this scenario. For example, signaling on an RRC layer or a PDCP layer is finally processed as signaling on a PHY layer and the signaling on the PHY layer is sent to the terminal device, or signaling on an RRC layer or a PDCP layer is converted from received signaling on a PHY layer. In this architecture, it may also be considered that the signaling on the RRC layer or the PDCP layer is sent by the DU, or sent by the DU and a radio frequency apparatus.

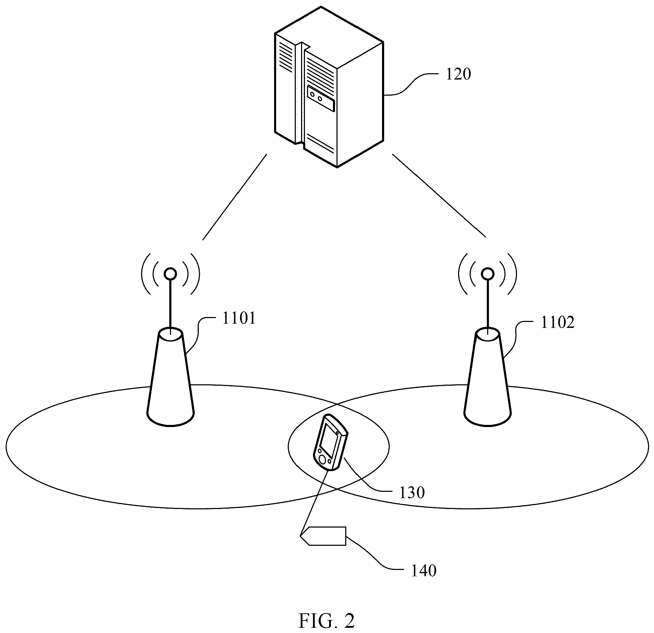

FIG. 2 is a schematic diagram of still another network architecture to which an embodiment of this application is applicable. As shown in FIG. 2, the network architecture may include a RAN device 1101, a RAN device 1102, a CN device 120, a terminal device 130, and an industrial device 140. A difference between the network architecture shown in FIG. 2 and the network architecture shown in FIG. 1a lies in that the terminal device 130 in FIG. 2 may be connected to the RAN device 1101 and the RAN device 1102 in a dual connectivity manner. The RAN device 1101 and the RAN device 1102 may separately establish an N3 data transmission tunnel to a same UPF entity, and the N3 data transmission tunnels serve as mutual backups. After a downlink data packet arrives at the UPF entity, the UPF entity duplicates the data packet, and then transmits the data packet to the two RAN devices through the N3 tunnels. The two RAN devices separately transmit the data packet to the terminal device via a Uu interface.

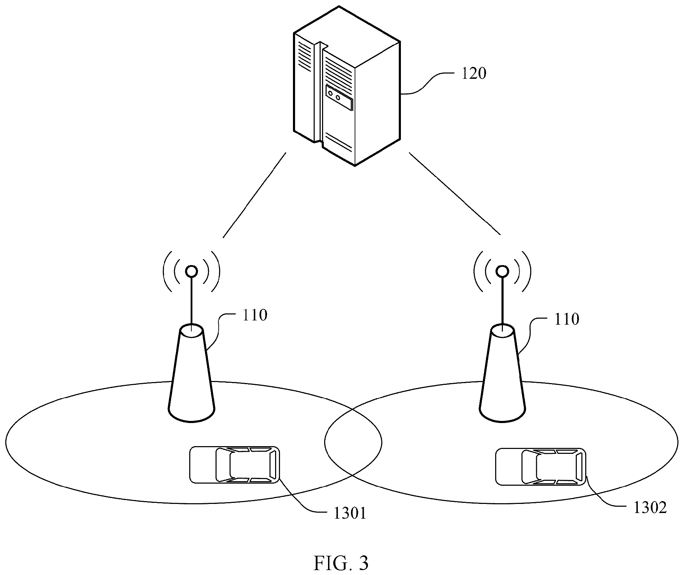

FIG. 3 is a schematic diagram of still another network architecture to which an embodiment of this application is applicable. As shown in FIG. 3, the network architecture may include a RAN device 110, a CN device 120, a terminal device 1301, and a terminal device 1302. A difference between the network architecture shown in FIG. 3 and the network architecture shown in FIG. 1a lies in that the terminal device 1301 and the terminal device 1302 in FIG. 3 may communicate with each other by using a sidelink (sidelink) resource. For example, the terminal device 1301 may send a data packet to the terminal device 1302.

The network architecture shown in FIG. 1a, FIG. 1b, FIG. 1c, FIG. 2, or FIG. 3 is applicable to communication systems of various radio access technologies (radio access technologies, RATs). For example, the network architecture may be an LTE communication system, a 5G (or referred to as new radio (new radio, NR)) communication system, or a transition system between an LTE communication system and a 5G communication system. The transition system may also be referred to as a 4.5G communication system, and certainly may alternatively be a future communication system. The network architecture and the service scenario that are described in the embodiments of this application are intended to describe the technical solutions in the embodiments of this application more clearly, and do not constitute a limitation on the technical solutions provided in the embodiments of this application. A person of ordinary skill in the art may know that, with evolution of the network architecture and emergence of new service scenarios, the technical solutions provided in the embodiments of this application are also applicable to similar technical problems.

An apparatus in the following embodiments of this application may be a CU, a DU, a terminal device, or a network device based on a function implemented by the apparatus. When the network device uses the foregoing CU-DU structure, the network device may be a CU, a DU, or a RAN device including a CU and a DU.

In the network architectures shown in FIG. 1a, FIG. 1b, FIG. 1c, and FIG. 2, data transmission may be performed between the terminal device and the network device. The network architecture shown in FIG. 1b is used as an example. A UPF entity may send a downlink data packet to the terminal device, and correspondingly, the terminal device may send an uplink data packet to the UPF entity.

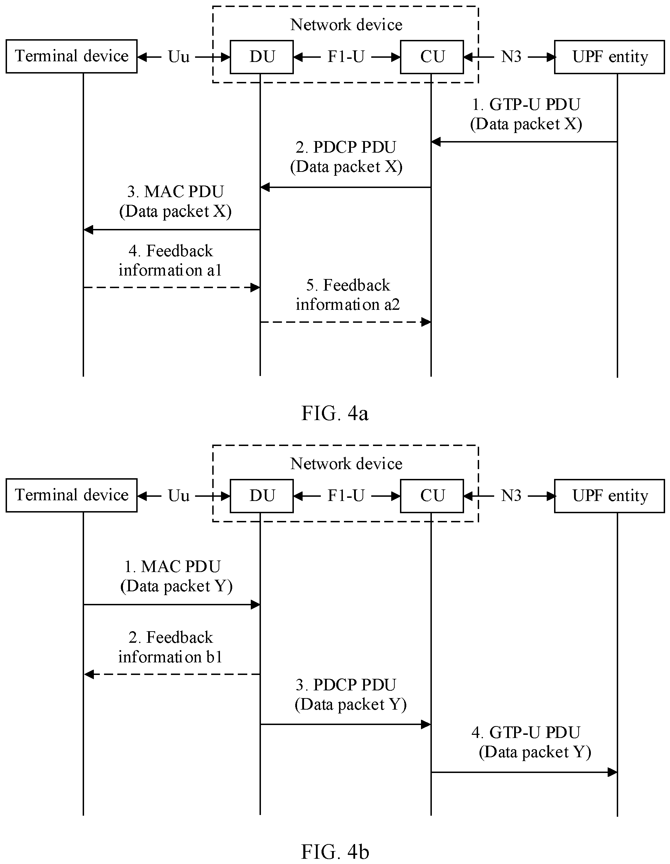

FIG. 4a is a schematic diagram of a possible transmission process of a downlink data packet. As shown in FIG. 4a, the process includes the following steps. Step 1: A UPF entity sends a GTP-U PDU to a CU, where the GTP-U PDU includes a data packet X. Step 2: The CU receives the GTP-U PDU, obtains the data packet X, encapsulates the data packet X into a PDCP PDU, and delivers the PDCP PDU to the DU through an F1-U interface. Step 3: The DU receives the PDCP PDU, obtains the data packet X, encapsulates the data packet X into a MAC PDU, and sends the MAC PDU to the terminal device through a Uu interface. Step 4: The terminal device sends feedback information a1 to the DU, where the feedback information a1 is used to indicate whether transmission of the data packet X succeeds. Step 5: After receiving the feedback information a1, the DU sends feedback information a2 to the CU based on the feedback information a1, where the feedback information a2 is used to indicate whether the transmission of the data packet X succeeds.

FIG. 4b is a schematic diagram of a possible transmission process of an uplink data packet. As shown in FIG. 4b, the following steps are included: Step 1: A terminal device receives a data packet Y from an industrial device, encapsulates the data packet Y into a MAC PDU, and sends the MAC PDU to a DU through a Uu interface. Step 2: The DU sends feedback information b1 to the terminal device, where the feedback information b1 is used to indicate whether transmission of the data packet Y succeeds. Step 3: If the DU successfully receives the data packet Y, the DU encapsulates the data packet Y into a PDCP PDU and delivers the PDCP PDU to the CU through an F1-U interface. Step 4: The CU receives the PDCP PDU, obtains the data packet Y, encapsulates the data packet Y into a GTP-U PDU, and sends the GTP-U PDU to a UPF entity.

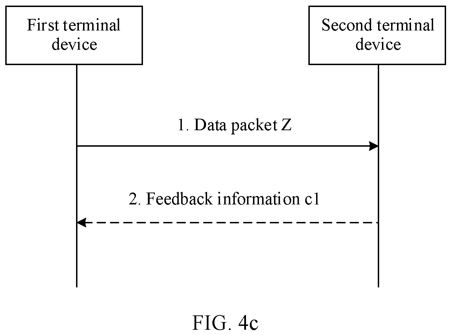

In the network architecture shown in FIG. 3, data transmission may be performed between a first terminal device (for example, a terminal device 1301) and a second terminal device (for example, a terminal device 1302). FIG. 4c is a possible schematic diagram of data transmission between a first terminal device and a second terminal device. As shown in FIG. 4c, the following steps are included. Step 1: The first terminal device obtains a data packet Z (for example, the first terminal device obtains the data packet Z from a network device), and sends the data packet Z to the second terminal device through a sidelink. Step 2: The second terminal device sends feedback information c1 to the first terminal device, where the feedback information c1 is used to indicate whether transmission of the data packet Z succeeds.

It should be noted that, in FIG. 4a to FIG. 4c, steps indicated by dashed lines are optional steps.

The following describes technical features related to data transmission in the embodiments of this application.

### (1) Duplication transmission on a PDCP layer

At least one radio bearer (radio bearer, RB) may be established between a transmit end and a receive end to transmit data. The radio bearer may be classified into a signaling radio bearer (signaling radio bearer, SRB) used for transmitting signaling data and a data radio bearer (data radio bearer, DRB) used for transmitting service data. A set of functional entities of a same radio bearer includes one PDCP entity, at least two RLC entities corresponding to the PDCP entity, at least one MAC entity corresponding to the at least two RLC entities, and at least one PHY entity corresponding to the at least one MAC entity.

Duplication transmission on the PDCP layer usually means that a data packet of a radio bearer is duplicated on the PDCP layer into a plurality of same packets (namely, duplicated packets), and then the plurality of data packets are delivered to a plurality of different RLC entities for transmission, and then are transmitted to a MAC layer through different logical channels. The logical channel is a channel between an RLC layer and the MAC layer. It should be noted that performing transmission again that is commonly mentioned refers to a retransmission (retransmission), but duplication transmission (duplication transmission) in the embodiments of this application is not a retransmission. A retransmission refers to transmitting a same data packet again after a transmission failure, or transmitting a same data packet for a plurality of consecutive times. Duplication transmission means that one data packet is duplicated to obtain two data packets, and the two data packets are separately transmitted on two logical channels. Herein, "duplication" may also be understood as "duplicated".

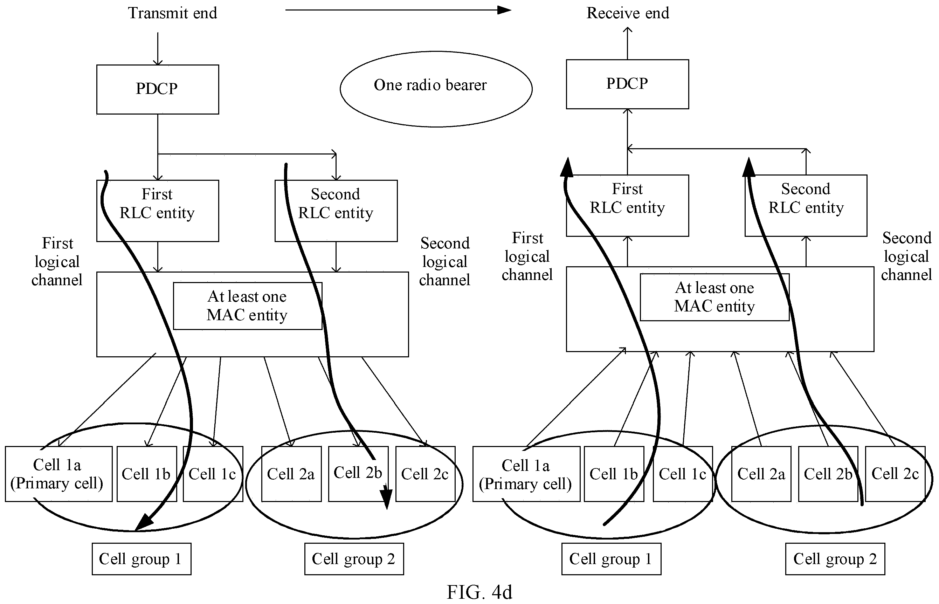

In a schematic diagram of data transmission shown in FIG. 4d, for a radio bearer between a transmit end and a receive end, at the transmit end, a same PDCP entity corresponds to at least two RLC entities, and each RLC entity corresponds to one logical channel for sending data. Correspondingly, at the receive end, a same PDCP entity corresponds to at least two RLC entities, and each RLC entity corresponds to one logical channel for receiving data. Therefore, the radio bearer between the transmit end and the receive end includes at least two logical channels. In the network architectures shown in FIG. 1a, FIG. 1b, FIG. 1c, and FIG. 2, the transmit end may be a terminal device, and the receive end may be a network device; or the receive end may be a terminal device, and the transmit end may be a network device. In the network architecture shown in FIG. 3, the transmit end may be a first terminal device (for example, the terminal device 1301), and the receive end may be a second terminal device (for example, the terminal device 1302). Alternatively, the receive end may be a second terminal device, and the transmit end may be a first terminal device.

The transmit end and the receive end shown in FIG. 4d respectively include a same PDCP entity, a first RLC entity corresponding to the same PDCP entity, and a second RLC entity corresponding to the same PDCP entity. The first RLC entity corresponds to a first logical channel, and the second RLC entity corresponds to a second logical channel. The transmit end sends data that is on the first logical channel to the receive end in a cell 1b or a cell group 1 corresponding to the first logical channel, and the receive end receives, in the cell 1b or the cell group 1 corresponding to the first logical channel, the data that is sent by the transmit end and that is on the first logical channel. The transmit end sends data that is on the second logical channel to the receive end in a cell 2b or a cell group 2 corresponding to the second logical channel, and the receive end receives, in the cell 2b or the cell group 2 corresponding to the second logical channel, the data that is on the second logical channel. In a duplication mode, duplication transmission is performed on data from the same PDCP entity on the second RLC entity of the transmit end and the first RLC entity of the transmit end, so as to improve data transmitting reliability of the transmit end. It should be noted that, in FIG. 4d, that the transmit end and the receive end separately correspond to two cell groups is used as an example. In another possible case, the transmit end and the receive end each may separately correspond to one cell group. This is not specifically limited.

It should be noted that the foregoing description is provided by using duplication of PDCP layers of two logical channels as an example. In another possible embodiment, duplication of PDCP layers of more logical channels may be alternatively performed. That is, a data packet duplicated on the PDCP layer is transmitted on one radio bearer through more logical channels. For example, the data packet duplicated on the PDCP layer may be transmitted through three or four logical channels.

### (2) LCP restriction parameter

In a 5G communication system, when configuring a logical channel of a terminal device, a network device may configure some restriction parameters for the logical channel. The restriction parameters may be referred to as LCP restrictions. In an example, the LCP restrictions may include one or more of the following: (1) allowedSCS-list, indicating a subcarrier spacing value of a physical resource that is allowed to transmit data of the logical channel; (2) maxPUSCH-duration, indicating a maximum duration value of a PUSCH resource allowed to transmit data of the logical channel; (3) configuredGrantType1Allowed, indicating whether data of the logical channel is allowed to be transmitted on a configured grant type 1 resource; (4) allowedServingCells, indicating a serving cell that is allowed to transmit data of the logical channel, and the parameter takes effect when carrier aggregation (carrier aggregation, CA) duplication (CA duplication) is configured for a corresponding DRB and is activated.

After receiving an uplink grant (grant) used for new transmission, the terminal device may first select, based on parameters such as an SCS, PUSCH duration, whether a resource corresponding to the grant is a configured grant type 1 resource, and cell information, corresponding to the grant, logical channels on which data transmission can be performed by using the grant, and then obtain, based on an LCP process, a data packet from the logical channels to generate a MAC PDU. For a URLLC service, the network device may configure specific LCP restrictions for a logical channel transmitting the service, to restrict the service to being sent only on a specific resource, so that a latency and reliability of the service is ensured. When a logical channel is configured with one set of LCP restrictions, the LCP restrictions of the logical channel can be modified by using an RRC reconfiguration message.

### (3) IIoT application survival time

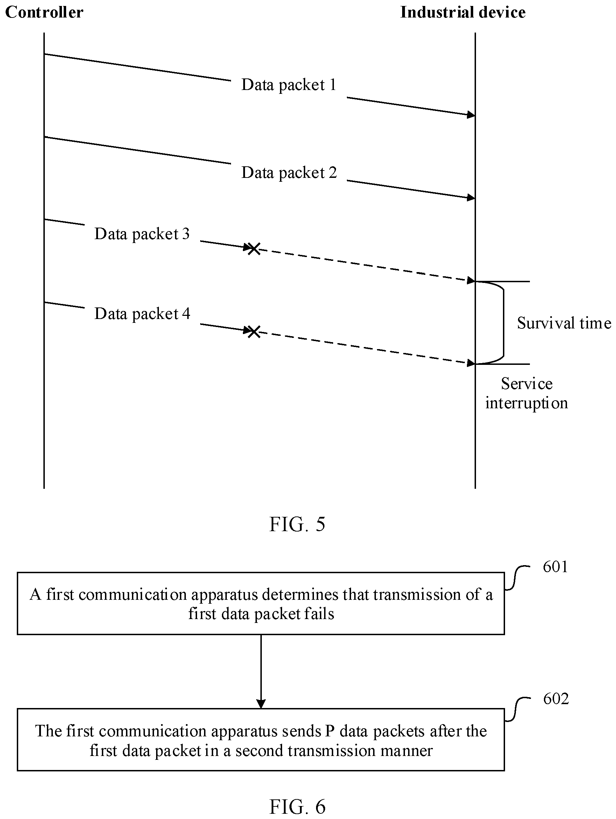

3GPP specifies that a latency of 1 millisecond (ms) and a reliability requirement of 99.999% need to be ensured for a user plane as an air interface indicator of a URLLC service. For an industrial control application, there may be higher requirements on latency assurance and reliability assurance, for example, 0.5 ms latency assurance and the reliability requirement of 99.9999%. In addition, to prevent occasional communication errors on a network layer from affecting an application layer of an industrial application, survival time (survival time) is set on the application layer. If the application layer does not receive a data packet in a time range in which the data packet is expected to arrive, a survival time timer is started. If an expected data packet arrives on the application layer in a running process of the timer, the timer stops. If the timer keeps running until expiration, to be specific, no expected data packet arrives on the application layer in a time period in which the survival time timer is active, interruption occurs on the application layer. In this case, the application layer enters a predefined state after interruption, for example, service interruption or system breakdown. This affects a normal service on the application layer. For industrial applications that periodically generate data packets, the survival time usually can be defined as a quantity of continuously lost packets. If the quantity of continuously lost packets exceeds a survival time threshold, the service fails. As shown in FIG. 5, a controller periodically generates a data packet and sends the data packet to an industrial device. Survival time of the industrial device is equal to a periodicity of generating the data packet, in other words, the industrial device does not allow two consecutive data packets to be lost. If a data packet 3 is lost in a transmission process, and the industrial device does not receive the data packet 3 at an expected time point, a survival time timer is started. If a new data packet (data packet 4) is received within the survival time, the industrial device works normally. Otherwise, service interruption occurs on the industrial device.

To meet a survival time requirement of an IIoT service (for example, some IIoT services cannot tolerate a loss of two consecutive packets), in a possible implementation, transmission reliability of each data packet is improved as much as possible. For example, a duplication transmission manner on a PDCP layer is used, and LCP restrictions are configured to restrict the data packet to being transmitted only on an appropriate resource. However, this manner causes high resource overheads. For example, transmission reliability of each TB on an air interface is 1-10⁻³ (namely, 99.9%, to be specific, only one failure occurs in 1000 transmissions on average). It is assumed that a quantity of physical resources occupied by one transmission is X on average. If reliability is improved to 1-10⁻⁹ in a duplication manner by using a plurality of legs (three logical channels need to be configured for a DRB), a quantity of resources occupied by transmission of 1000 PDCP SDUs is 3000^{∗}X. Consequently, resource overheads are high.

Based on this, an embodiment of this application provides a data transmission method, to avoid service interruption. In an example, the method provided in this embodiment of this application may include two possible solutions: Solution 1 and Solution 2. In Solution 1, if determining that transmission of a first data packet fails, a first communication apparatus sends P data packets after the first data packet in a second transmission manner, where P is an integer greater than or equal to 1. Transmission reliability corresponding to the second transmission manner is greater than transmission reliability corresponding to a first transmission manner, and the first transmission manner is used by the first communication apparatus to send the first data packet. In this way, because the first communication apparatus sends the P data packets after the first data packet in the second transmission manner, transmission reliability of the P data packets is improved, so that successful transmission of the P data packets can be effectively ensured, and service interruption can be avoided. In addition, compared with a manner of improving transmission reliability of all data packets, in this solution, only the transmission reliability of the P data packets needs to be improved, so that resource overheads can be effectively reduced. For example, in this embodiment of this application, a data packet whose transmission fails is detected, and a next data packet or a plurality of next data packets are transmitted with higher reliability. For example, a next data packet is transmitted by using 100^{∗}X resources. In this case, a quantity of resources occupied for transmitting 1000 PDCP SDUs may be 1099^{∗}X, and resource overheads can be greatly reduced. In Solution 2, if determining that transmission of a first data packet fails, a first communication apparatus sends first information to a second communication apparatus, where the first information is used to indicate to send P data packets after the first data packet in a second transmission manner. Transmission reliability corresponding to the second transmission manner is greater than transmission reliability corresponding to a first transmission manner, and the first transmission manner is used by the second communication apparatus to send the first data packet. In this way, the first communication apparatus indicates the second communication apparatus to send the P data packets after the first data packet in the second transmission manner, so that the second communication apparatus can improve transmission reliability of the P data packets, to effectively ensure successful transmission of the P data packets, and avoid service interruption. In addition, compared with a manner of improving transmission reliability of all data packets, in this solution, only the transmission reliability of the P data packets needs to be improved, so that resource overheads can be effectively reduced.

### Embodiment 1

Embodiment 1 is based on a possible implementation of the data transmission method described in Solution 1.

FIG. 6 is a schematic flowchart corresponding to a data transmission method according to Embodiment 1 of this application. As shown in FIG. 6, the method includes the following steps.

Step 601: A first communication apparatus determines that transmission of a first data packet fails.

Step 602: The first communication apparatus sends P data packets after the first data packet in a second transmission manner, where P is an integer greater than or equal to 1. Transmission reliability corresponding to the second transmission manner is greater than transmission reliability corresponding to a first transmission manner, and the first transmission manner is used by the first communication apparatus to send the first data packet.

In an example, P may be a predefined value, may be determined by a core network device, or may be determined by a network device. When a value of P is determined by the core network device or the network device, the first communication apparatus may obtain the value of P from the core network device or the network device.

In another example, the P data packets may be data packets sent in a second time period, and duration of the second time period may be predefined. In this case, a value of P is related to the duration of the second time period, or may be related to a periodicity of sending data packets by the first communication apparatus. For example, after determining that the transmission of the first data packet fails, the first communication apparatus may start a timer. Duration of the timer is the duration of the second time period. In a running process of the timer, the first communication apparatus sends a data packet in the second transmission manner. After the timer stops, the first communication apparatus sends a data packet in the first transmission manner.

The following describes specific implementations of step 601 and step 602 with reference to Case 1 to Case 3.

### Case 1

In Case 1, the foregoing method is applicable to the network architecture shown in FIG. 1b, the first communication apparatus may be a CU, and the first data packet and the P data packets after the first data packet may be data packets transmitted on a downlink.

In this case, that the transmission of the first data packet fails in step 601 may mean that transmission of the first data packet fails on an N3 interface, to be specific, the CU fails to receive the first data packet from a UPF entity. In this case, the CU fails to send the first data packet in the first transmission manner. Alternatively, that the transmission of the first data packet fails in step 601 may mean that transmission of the first data packet fails on a Uu interface, to be specific, the CU successfully receives the first data packet from a UPF entity, and sends the first data packet in the first transmission manner, but a terminal device fails to receive the first data packet.

The following describes several possible implementations in which the CU determines that the transmission of the first data packet fails in step 601. Implementation 1 to implementation 3 mainly relate to a case in which the transmission of the first data packet fails on the N3 interface. Implementation 4 and Implementation 5 mainly relate to a case in which the transmission of the first data packet fails on the Uu interface.

Implementation 1: The CU receives a second data packet from the UPF entity at a first moment, and if not receiving the first data packet within a first time period after the first moment, the CU determines that the transmission of the first data packet fails, where a first sequence number of the second data packet is adjacent to a first sequence number of the first data packet. The first sequence number may be a GTP-U sequence number (sequence number, SN), and a length of the first time period may be predefined.

In this embodiment of this application, because a data packet received by the CU from the UPF entity is encapsulated by using a GTP-U protocol (where the GTP-U protocol is one of general packet radio service (general packet radio service, GPRS) tunneling protocols (GPRS tunneling protocols, GTPs)), each data packet has a GTP-U SN. That a first sequence number of the second data packet is adjacent to a first sequence number of the first data packet may be understood as that the second data packet and the first data packet are two data packets sequentially received from the UPF entity in a normal case. For example, a GTP-U SN of the second data packet may be less than a GTP-U SN of the first data packet. If not receiving a first data packet whose GTP-U SN is equal to X, within the first time period after receiving a second data packet (where for example, a GTP-U SN of the second data packet is equal to X-1) from the UPF entity, the CU may determine that the first data packet is lost during transmission through the N3 interface, that is, the transmission of the first data packet fails. In addition, considering that a quantity of values of the GTP-U SN may be limited, for example, if a length of the GTP-U SN is L (in other words, there are L bits in total), to be specific, the GTP-U SN has 0 to 2^{L}-1 values in total, and if a value of a GTP-U SN of a data packet is a maximum value, a value of a GTP-U SN of a next data packet of the data packet may be reversed to 0, that is, renumbered from 0. Therefore, if not receiving a first data packet whose GTP-U SN is equal to 0, within the first time period after receiving a second data packet (where for example, a GTP-U SN of the second data packet is equal to 2^{L}-1) from the UPF entity, the CU may determine that the transmission of the first data packet fails. That is, that the GTP-U SN of the second data packet is adjacent to the GTP-U SN of the first data packet may further include a case in which the value of the GTP-U SN of the second data packet is 2^{L}-1 and the value of the GTP-U SN of the first data packet is 0.

Implementation 2: If determining that a GTP-U SN of a data packet received from the UPF entity is missing and the missing GTP-U SN corresponds to the first data packet, the CU determines that the transmission of the first data packet fails. For example, after receiving a data packet whose GTP-U SN is equal to X-1, the CU receives a data packet whose GTP-U SN is equal to X+1, that is, a GTP-U SN that is equal to X is missing. In this case, the CU may determine that a first data packet corresponding to the GTP-U SN that is equal to X is lost during transmission through the N3 interface, that is, the transmission of the first data packet fails.

Implementation 3: If not receiving the first data packet in an arrival time range of the first data packet, the CU determines that the transmission of the first data packet fails.

For example, for a periodic service, the CU may determine an arrival time range corresponding to each data packet. The arrival time range corresponding to each data packet may be understood as a time range in which each data packet should arrive. For example, a data packet 1 should arrive in a time range of T1 to T2, and a data packet 2 should arrive in a time range of T2 to T3. If not receiving the first data packet in the arrival time range corresponding to the first data packet, the CU may determine that the first data packet is lost during transmission through the N3 interface. The CU may determine, based on service assistance information indicated by the core network device, the arrival time range corresponding to each data packet. The service assistance information may include an arrival periodicity of a plurality of data packets and arrival time of the 1^{st} data packet in the plurality of data packets, and optionally, may further include one or more of the following: a data packet latency jitter, a GTP-U SN of the 1^{st} data packet, another quality of service parameter reflecting a data packet latency and/or reliability requirement, and the like.

Implementation 4: The CU sends the first data packet in the first transmission manner, and if receiving first feedback information sent by the terminal device, the CU determines that the transmission of the first data packet fails, where the first feedback information is used to indicate that the transmission of the first data packet fails. The first feedback information is feedback information from a PDCP layer, for example, a PDCP status report. For example, after the CU sends the first data packet in the first transmission manner, a PDCP entity of the CU may detect, based on the PDCP status report of the terminal device, whether the transmission of the first data packet succeeds on the Uu interface.

Implementation 5: The CU sends the first data packet in the first transmission manner, and if receiving indication information sent by a DU connected to the CU, the CU determines that the transmission of the first data packet fails, where the indication information is used to indicate that the transmission of the first data packet fails.

In this embodiment of this application, the DU may send an F1-U interface message to the CU, and the F1-U interface message includes the indication information. The indication information may indicate, in an explicit or implicit manner, that the transmission of the first data packet fails. For example, the indication information may include a sending failure indication (failure indication), or may include a PDCP SN and/or an NR-U SN (where an NR-U SN is allocated to each PDCP PDU sent by the CU to the DU) of the first data packet. In this case, this may be understood as that the indication information indicates, in the explicit manner, that the transmission of the first data packet fails. For another example, the indication information includes a PDCP SN and/or an NR-U SN of the first data packet, but does not include a sending failure indication. In this case, this may be understood as that the indication information indicates, in the implicit manner, that the transmission of the first data packet fails.

When the indication information indicates, in the explicit manner, that the transmission of the first data packet fails, Table 1 shows an example of a format of the F1-U interface message sent by the DU to the CU. Content marked in bold and underlined is content newly added in this embodiment of this application based on an existing format of an F1-U interface message. During specific implementation, a location, a name, and a quantity of occupied bytes of a newly added field may be determined based on a requirement, and are not limited.

**Table 1: Example of the format of the F1-U interface message**

| Bits (bits) | | | | | | | | Number of Octets |
|---|---|---|---|---|---|---|---|---|
| 7 | 6 | 5 | 4 | 3 | 2 | 1 | 0 | |
| Protocol data unit (protocol data unit, PDU) type (=2) | | | | PDCP duplication indication | Assistance information indication | Spare | | 1 |
| Spare | | | | | | **Failure indication** | PDCP duplication function activation suggestion | 1 |
| Number of assistance information fields | | | | | | | | 0 or 1 |
| Assistance information type | | | | | | | | 0 or (2^{∗}Sum of the number of assistance information fields+the number of bytes of radio quality assistance information fields) |
| Number of bytes of radio quality assistance information fields | | | | | | | | |
| Radio quality assistance information | | | | | | | | |
| **PDCP SN/NR-U SN** | | | | | | | | **0/3** |

For example, refer to FIG. 4a. After receiving the feedback information a1 sent by the terminal device, the DU may send the feedback information a2 to the CU. If the feedback information a1 indicates that the transmission of the first data packet fails, the DU may send the feedback information a2 to the CU. In this case, the feedback information a2 may be understood as the foregoing indication information. When the feedback information a1 indicates that the transmission of the first data packet fails, the feedback information a1 may be feedback information from an RLC layer, for example, an RLC status report; or the feedback information a1 may be HARQ feedback information, for example, the 1^{st} HARQ NACK to the Q^{th} HARQ NACK, where Q is an integer greater than or equal to 1. To be specific, if a value of Q is 1, after receiving the first HARQ NACK sent by the terminal device for the first data packet (that is, receiving one HARQ NACK), the DU may determine that the transmission of the first data packet fails, and send the indication information to the CU. If a value of Q is greater than 1, after receiving the 1^{st} HARQ NACK to the Q^{th} HARQ NACK (that is, receiving Q HARQ NACKs, indicating that the transmission of the first data packet fails on the Uu interface for Q times) sent by the terminal device for the first data packet, the DU may determine that the transmission of the first data packet fails, and send the indication information to the CU. A specific value of Q may be set by a person skilled in the art based on an actual requirement.

The following describes a possible implementation in which the CU sends the P data packets in the second transmission manner in step 602.

In this embodiment of this application, a DRB used to transmit the P data packets may be associated with W logical channels, and W is an integer greater than or equal to 2.

In an example, the first transmission manner may correspond to M logical channels in the W logical channels, the second transmission manner may correspond to N logical channels in the W logical channels, M and N are integers greater than or equal to 1, and N is greater than M. In this case, that the CU sends P data packets after the first data packet in a second transmission manner may be understood as that the CU sends the P data packets through the N logical channels. For example, W=2, N=1, and M=2. For another example, W=4, N=2, and M=3. For example, the DRB may be configured with a duplication transmission function. When two or more logical channels are used to send a data packet, the data packet may be sent in a duplication transmission manner on a PDCP layer.

In this example, transmission reliability corresponding to each of the W logical channels may be the same. Because N is greater than M, to be specific, a quantity of the logical channels corresponding to the second transmission manner is greater than a quantity of the logical channels corresponding to the first transmission manner, the transmission reliability corresponding to the second transmission manner is greater than the transmission reliability corresponding to the first transmission manner.

In another example, the first transmission manner may correspond to a first logical channel in the W logical channels, the second transmission manner may correspond to a second logical channel in the W logical channels, and transmission reliability corresponding to the first logical channel is less than transmission reliability corresponding to the second logical channel. In this case, that the CU sends P data packets after the first data packet in a second transmission manner may be understood as that the CU sends the P data packets through the second logical channel.

In this example, transmission reliability corresponding to each of the W logical channels may be different. For example, a transmission parameter corresponding to the first logical channel is different from a transmission parameter corresponding to the second logical channel.

The transmission parameter is described herein. For example, the transmission parameter may include one or more of the following: a modulation and coding scheme (modulation and coding scheme, MCS) index value, a frame structure numerology (numerology), an identifier of a cell for data transmission, and an identifier of a bandwidth part (bandwidth part, BWP) for data transmission. The frame structure numerology may include one or more of the following: a subcarrier spacing, information about a cyclic prefix (cyclic prefix, CP), information about a time unit, and a bandwidth. The subcarrier spacing is a value of a spacing between center locations or peak locations of two adjacent subcarriers in frequency domain in an orthogonal frequency division multiplexing (orthogonal frequency division multiplexing, OFDM) system. For example, the subcarrier spacing may be 15 kHz, 30 kHz, 60 kHz, 120 kHz, 240 kHz, or 480 kHz. The information about the CP may include a length of the CP and/or a type of the CP. For example, the CP may be a normal CP (normal CP, NCP) or an extended CP (extended CP, ECP). The time unit is used to indicate a time unit in time domain, and may be, for example, a sampling point, a symbol, a mini-slot (mini-slot), a slot (slot), a subframe (subframe), or a radio frame. The information about the time unit may include a type, a length, a structure, or the like of the time unit.

Different MCSs or frame structure numerologies can be used to ensure different transmission reliability. For example, a lower MCS order (namely, a smaller MCS index value) indicates higher transmission reliability, and a smaller subcarrier spacing indicates higher transmission reliability. For example, the transmission parameter includes an MCS and a subcarrier spacing. An MCS index value corresponding to the first logical channel may be greater than an MCS index value corresponding to the second logical channel, and/or a subcarrier spacing corresponding to the first logical channel may be greater than a subcarrier spacing corresponding to the second logical channel.

It should be noted that the transmission parameter may also be referred to as a scheduling parameter or another possible name. The foregoing describes some information that may be included in the transmission parameter. In another possible embodiment, the transmission parameter may further include other information that affects transmission reliability. This is not specifically limited.

### Case 2

In Case 2, the foregoing method is applicable to the network architecture shown in FIG. 1b, the first communication apparatus may be a DU, and the first data packet and the P data packets after the first data packet may be data packets transmitted on a downlink.

In this case, that the transmission of the first data packet fails in step 601 may mean that transmission of the first data packet fails on a Uu interface, to be specific, the DU sends the first data packet in the first transmission manner, but a terminal device fails to receive the first data packet.

For example, that the DU determines that the transmission of the first data packet fails in step 601 may mean that the DU sends the first data packet in the first transmission manner, and if receiving second feedback information sent by the terminal device, the DU determines that the transmission of the first data packet fails, where the second feedback information is used to indicate that the transmission of the first data packet fails. Refer to FIG. 4a. When the feedback information a1 is used to indicate that the transmission of the first data packet fails, the feedback information a1 may be understood as the foregoing second feedback information. In this case, the feedback information a1 may be an RLC status report, or may be the 1^{st} HARQ NACK to the Q^{th} HARQ NACK. For details, refer to the description in Case 1.

For example, in step 602, the first transmission manner may correspond to a first transmission parameter, and the second transmission manner may correspond to a second transmission parameter. That the DU sends P data packets in a second transmission manner means the DU sends the P data packets by using the second transmission parameter. The first transmission parameter and the second transmission parameter herein may be transmission parameters that are of two types and that correspond to a same logical channel. The DU transmits a data packet by using different transmission parameters of the logical channel, to ensure different transmission reliability, and may further transmit the data packet by using a corresponding transmission parameter based on an actual requirement.

The transmission parameter may include one or more of the following: an MCS index value, a frame structure numerology, an identifier of a cell for data transmission, an identifier of a BWP for data transmission, and the like. For details, refer to the description in Case 1. For example, the transmission parameter includes an MCS and a subcarrier spacing. An MCS index value included in the first transmission parameter may be greater than an MCS index value included in the second transmission parameter, and/or a subcarrier spacing included in the first transmission parameter may be greater than a subcarrier spacing included in the second transmission parameter.

### Case 3

In Case 3, the foregoing method is applicable to the network architectures shown in FIG. 1b and FIG. 3, and the first communication apparatus may be a first terminal device. When the method is applicable to the network architecture shown in FIG. 1b, the first data packet and the P data packets after the first data packet may be data packets transmitted on an uplink, and a second communication apparatus may be a network device. When the method is applicable to the network architecture shown in FIG. 3, the first data packet and the P data packets after the first data packet may be data packets transmitted on a sidelink, and a second communication apparatus may be a second terminal device.

The following describes several possible implementations in which the first terminal device determines that the transmission of the first data packet fails in step 601.

Implementation 1: The first terminal device sends the first data packet in the first transmission manner, and if receiving third feedback information sent by the second communication apparatus, the first terminal device determines that the transmission of the first data packet fails, where the third feedback information is used to indicate that the transmission of the first data packet fails. In this implementation, the second communication apparatus may be the network device or the second terminal device. If the second communication apparatus is the network device, as shown in FIG. 4b, the third feedback information may be understood as the feedback information b1. If the second communication apparatus is the second terminal device, as shown in FIG. 4c, the third feedback information may be understood as the feedback information c1. The third feedback information may be feedback information from a PDCP layer, for example, a PDCP status report. Alternatively, the third feedback information may be feedback information from an RLC layer, for example, an RLC status report. Alternatively, the third feedback information may be HARQ feedback information (for example, a HARQ NACK or a sidelink HARQ NACK).

Implementation 2: The first terminal device sends the first data packet in the first transmission manner, and if not receiving, within a third time period, fourth feedback information sent by the second communication apparatus, the first terminal device determines that the transmission of the first data packet fails, where the fourth feedback information is used to indicate that the transmission of the first data packet succeeds. Duration of the third time period may be predefined.

In this implementation, the second communication apparatus may be the network device or the second terminal device. For example, it may be predefined that if the second communication apparatus successfully receives the first data packet, the second communication apparatus sends the fourth feedback information to the first terminal device. Therefore, if the fourth feedback information is not sent, it indicates that the transmission of the first data packet fails. The fourth feedback information may be feedback information from a PDCP layer, for example, a PDCP status report. Alternatively, the fourth feedback information may be feedback information from an RLC layer, for example, an RLC status report. Alternatively, the fourth feedback information may be HARQ feedback information (for example, a HARQ ACK or a sidelink HARQ ACK).

Implementation 3: The network device may configure or preferably allocate a configured grant (configured grant, CG) resource to a service of a logical channel. If the network device (for example, a DU) fails to receive a data packet on the CG resource, the network device may send DCI to the terminal device, to schedule a retransmission of the data packet whose transmission fails. In this case, the first terminal device sends the first data packet in the first transmission manner, for example, sends the first data packet on the CG resource in the first transmission manner. If receiving the 1^{st} piece of DCI to the K^{th} piece of DCI that are sent by the network device, where the 1^{st} piece of DCI to the K^{th} piece of DCI are used to schedule the 1^{st} retransmission to the K^{th} retransmission of the first data packet, the first terminal device may determine that the transmission of the first data packet fails, where K is an integer greater than or equal to 1.

In this implementation, if a value of K is 1, after receiving the 1^{st} piece of DCI sent by the network device for the first data packet (to be specific, receiving one piece of DCI for scheduling a retransmission), the first terminal device may determine that the transmission of the first data packet fails. If a value of K is greater than 1, after receiving the 1^{st} piece of DCI to the K^{th} piece of DCI that are sent by the network device for the first data packet (to be specific, receiving K pieces of DCI for scheduling retransmissions, indicating that the transmission of the first data packet fails on the Uu interface for K times), the first terminal device may determine that the transmission of the first data packet fails. A specific value of K may be set by a person skilled in the art based on an actual requirement. This implementation may also be applied to a case in which the network device schedules new transmission and a retransmission of the first data packet of the terminal device by using a dynamic grant (dynamic grant, DG) resource. For example, the network device schedules, on the DG resource, new transmission of the first data packet of the terminal device. If the network device fails to receive the first data packet on the DG resource, the network device may schedule a retransmission by using DCI. When receiving DCI for scheduling a retransmission or K pieces of DCI for scheduling retransmissions sent by the network device for the first data packet, the terminal device may determine that the transmission of the first data packet fails.

The following describes a possible implementation in which the first terminal device sends the P data packets in the second transmission manner in step 602.

In this embodiment of this application, a DRB used to transmit the P data packets may be associated with W logical channels, and W is an integer greater than or equal to 1.

In an example, the first transmission manner corresponds to M logical channels in the W logical channels, the second transmission manner corresponds to N logical channels in the W logical channels, M and N are integers greater than or equal to 1, and N is greater than M. That the first terminal device sends P data packets after the first data packet in the second transmission manner may be understood as that the first terminal device sends the P data packets through the N logical channels. In another example, the first transmission manner corresponds to a first logical channel in the W logical channels, and the second transmission manner corresponds to a second logical channel in the W logical channels. That the first communication apparatus sends P data packets after the first data packet in a second transmission manner includes: The first terminal device sends the P data packets through the second logical channel. For example, in the two examples described herein, a specific implementation in which the first terminal device sends the P data packets in the second transmission manner is similar to a specific implementation in which the CU sends the P data packets in the second transmission manner in Case 1. For details, refer to the foregoing description.

In still another example, the W logical channels include a third logical channel, the first transmission manner corresponds to a first transmission parameter of the third logical channel, and the second transmission manner corresponds to a second transmission parameter of the third logical channel. That the first terminal device sends the P data packets in the second transmission manner may be understood as that the first terminal device sends the P data packets by using the second transmission parameter of the third logical channel. For example, in the example described herein, a specific implementation in which the first terminal device sends the P data packets in the second transmission manner is similar to a specific implementation in which the DU sends the P data packets in the second transmission manner in Case 2. For details, refer to the foregoing description.

According to the method described in Embodiment 1, after determining that the transmission of the first data packet fails, the first communication apparatus may improve transmission reliability of the P data packets after the first data packet, so as to effectively ensure that transmission of the P data packets succeeds and avoid service interruption. In addition, a problem of resource overheads caused by transmitting all data packets with very high reliability is alleviated. In addition, both determining that the transmission of the first data packet fails and improving the transmission reliability are performed by the first communication apparatus, so that a latency required for the action of improving the transmission reliability is shorter and efficiency is higher. Moreover, signaling exchange does not need to be performed between a plurality of communication apparatuses, so that transmission resource overheads caused by signaling exchange are avoided, and implementation of such an action is facilitated.

### Embodiment 2

Embodiment 2 is based on a possible implementation of the data transmission method described in Solution 2.

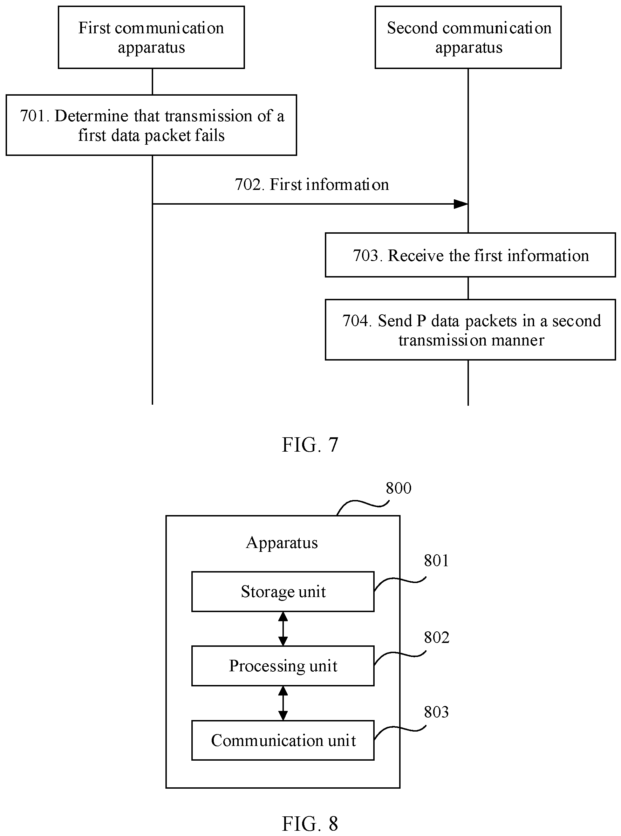

FIG. 7 is a schematic flowchart corresponding to a data transmission method according to Embodiment 2 of this application. As shown in FIG. 7, the method includes the following steps.

Step 701: A first communication apparatus determines that transmission of a first data packet fails.

Step 702: The first communication apparatus sends first information to a second communication apparatus, where the first information is used to indicate to send P data packets after the first data packet in a second transmission manner; and transmission reliability corresponding to the second transmission manner is greater than transmission reliability corresponding to a first transmission manner, and the first transmission manner is used by the second communication apparatus to send the first data packet.

Step 703: The second communication apparatus receives the first information.

Step 704: The second communication apparatus sends the P data packets in the second transmission manner.

The following describes specific implementations of the foregoing steps (mainly step 701 and step 702) with reference to Case 4 to Case 8.

### Case 4

In Case 4, the foregoing method is applicable to the network architecture shown in FIG. 1b. The first communication apparatus may be a CU, and the second communication apparatus may be a DU connected to the CU. The first data packet and the P data packets after the first data packet may be data packets transmitted on a downlink.

In this case, step 701 is the same as an implementation in which the CU determines that the transmission of the first data packet fails in Case 1, and details are not described again.

The following describes a possible implementation in which the CU sends the first information to the DU in step 702.

In a possible implementation, the CU may send an F1-U interface message to the DU, and the F1-U interface message includes the first information. For example, the first information may include at least one of the following: a second transmission parameter corresponding to the second transmission manner; a PDCP SN and/or an NR-U SN of the first data packet; a value of P; and duration of a second time period, where the P data packets are data packets sent in the second time period.

In an example, the first information includes the PDCP SN (and/or the NR-U SN) of the first data packet. For example, the NR-U SN of the first data packet is equal to 5. In this case, this may be understood as that the first information indicates that transmission reliability of the P data packets after the first data packet needs to be improved, and how to improve the transmission reliability of the P data packets and a specific value of P (or the duration of the second time period) may be determined by the DU. For example, after receiving the first information, the DU may learn that the transmission of the first data packet fails. If the DU sends a data packet by using a first transmission parameter before the DU receives the first information, the DU may then send a data packet after the first data packet by using a second transmission parameter, in other words, the DU may send a data packet whose NR-U SN is equal to 6, by using the second transmission parameter. Transmission reliability corresponding to the first transmission parameter is less than transmission reliability corresponding to the second transmission parameter. In this manner, the first information includes less information, so that transmission resource overheads can be effectively reduced. In addition, the DU determines a specific manner of improving the transmission reliability, so that the manner of improving the transmission reliability is relatively flexible. In addition, the DU uses, based on air interface performance, a corresponding manner of improving the transmission reliability, so that reasonableness of the used manner of improving the transmission reliability can be more effectively ensured.

In another example, the first information includes the PDCP SN (and/or the NR-U SN) of the first data packet and the value of P (or the duration of the second time period). For example, the NR-U SN of the first data packet is equal to 5, and P is equal to 2. In this case, this may be understood as that the first information indicates the value of P and indicates that transmission reliability of the P data packets after the first data packet needs to be improved, and how to specifically improve the transmission reliability of the P data packets may be determined by the DU. For example, after receiving the first information, the DU may learn that the transmission of the first data packet fails. If the DU sends a data packet by using a first transmission parameter before the DU receives the first information, the DU may then send two data packets after the first data packet by using a second transmission parameter, in other words, the DU may send data packets whose NR-U SNs are equal to 6 and 7, by using the second transmission parameter.

In still another example, the first information includes a second transmission parameter corresponding to the second transmission manner, the PDCP SN (and/or the NR-U SN) of the first data packet, and the value of P (or the duration of the second time period). For example, the NR-U SN of the first data packet is equal to 5, and P is equal to 2. In this case, this may be understood as that the first information indicates that transmission reliability of the P data packets after the first data packet needs to be improved, and indicates the value of P and a specific manner of improving the transmission reliability. In this way, after receiving the first information, the DU may learn that transmission of the first data packet fails, and then may send the two data packets after the first data packet by using the second transmission parameter. In this manner, the CU explicitly indicates to send the P data packets in the second transmission manner. Then, after receiving the indication, the DU may perform a corresponding operation based on the indication, without determining a specific manner of improving the transmission reliability, so that a processing load of the DU can be effectively reduced.

In an alternative manner of this example, a plurality of transmission parameters and indexes of the plurality of transmission parameters (where the plurality of transmission parameters include the second transmission parameter) may be predefined. In this way, the first information may include an index of the second transmission parameter, and the second transmission parameter is indicated by using the index. Therefore, a quantity of bits included in the first information can be reduced, and resource overheads can be effectively reduced.

It should be noted that, if the first information does not include the PDCP SN and the NR-U SN of the first data packet, and the second communication apparatus receives the first information at a second moment, the second communication apparatus may use the second moment as a reference. For example, the second communication apparatus may improve transmission reliability of the P data packets that need to be sent after the second moment, or transmission reliability of data packets in a period of duration after the second moment.

The foregoing describes only content that may be included in the first information. In another possible embodiment, the first information may further include other content. This is not specifically limited.

In another possible implementation, the P data packets include a third data packet, the first information includes indication information corresponding to the third data packet, and the indication information corresponding to the third data packet is used to indicate to send the third data packet in the second transmission manner. For example, the indication information corresponding to the third data packet may include a second transmission parameter corresponding to the second transmission manner, or an index of the second transmission parameter.

For example, after determining that the transmission of the first data packet fails, if determining to improve transmission reliability of the P data packets after the first data packet, the CU may add an indication field to a packet header (packet header) of each data packet of the P data packets. (For example, an indication field added to the third data packet carries the indication information corresponding to the third data packet.) Then, the CU sends, to the DU, the data packet (for example, the third data packet) to which the indication field is added. Correspondingly, after receiving the third data packet, the DU may send the third data packet based on the indication field in the third data packet by using the second transmission parameter indicated by the indication field. Compared with a manner in which the first information is separately sent by using an F1-U interface message, in this manner, the CU may add the indication field to the P data packets delivered to the DU, so that signaling overheads can be effectively reduced.

Table 2 is an example of a format of a data packet sent by the CU to the DU. Content marked in bold and underlined is an indication field (namely, reliability indication (reliability indication)) newly added in this embodiment of this application based on an existing data packet format. During specific implementation, a location, a name, and a quantity of occupied bytes of the newly added field may be determined based on a requirement, and are not limited.

**Table 2: Example of the data packet format**

| Bits (Bits) | | | | | | | | Number of Octets |
|---|---|---|---|---|---|---|---|---|
| 7 | 6 | 5 | 4 | 3 | 2 | 1 | 0 | |
| PDU type (=0) | | | | Spare | Downlink discard block | Downlink flush | Report polling | 1 |
| Spare | | | **Reliability indication** | Report submission | User data existence flag | Assistance information report polling flag | Retransmission flag | 1 |
| NR-U SN | | | | | | | | 3 |
| Downlink discard NR PDCP PDU SN | | | | | | | | 0 or 3 |
| Downlink discard number of blocks | | | | | | | | 0 or 1 |
| Downlink discard NR PDCP PDU SN start (first block) | | | | | | | | 0 or 3 |
| Discarded block size (first block) | | | | | | | | 0 or 1 |
| ··· | | | | | | | | |
| Downlink discard NR PDCP PDU SN start (last block) | | | | | | | | 0 or 3 |
| Discarded block size (last block) | | | | | | | | 0 or 1 |
| Downlink report NR PDCP PDU SN | | | | | | | | 0 or 3 |
| Padding (Padding) | | | | | | | | 0-3 |

### Case 5

In Case 5, the foregoing method is applicable to the network architecture shown in FIG. 1b. The first communication apparatus is a DU, and the second communication apparatus is a terminal device. The first data packet and the P data packets after the first data packet may be data packets transmitted on an uplink.

The following describes several possible implementations in which the DU determines that the transmission of the first data packet fails in step 701.

Implementation 1: The DU receives a second data packet from the terminal device at a first moment, and if not receiving the first data packet within a first time period after the first moment, the DU determines that the transmission of the first data packet fails, where a fourth sequence number of the second data packet is adjacent to a fourth sequence number of the first data packet. The fourth sequence number may be an RLC SN.

In this embodiment of this application, each data packet received by the DU from the terminal device has an RLC SN. If not receiving a first data packet whose RLC SN is equal to Y within the first time period after the CU receives a second data packet (for example, an RLC SN of the second data packet is equal to Y-1) from a UPF entity, the CU may determine that the first data packet is lost during transmission on a Uu interface, that is, the transmission of the first data packet fails. In addition, considering that a quantity of RLC SNs may be limited (similar to the GTP-U SN described above), that an RLC SN of the second data packet is adjacent to an RLC SN of the first data packet may further include a case in which a value of the RLC SN of the second data packet is a maximum value and a value of the RLC SN of the first data packet is 0.

Implementation 2: If determining that a fourth sequence number of a data packet received from the terminal device is missing and the missing fourth sequence number corresponds to the first data packet, the DU determines that the transmission of the first data packet fails. For example, after receiving a data packet whose RLC SN is equal to Y-1, the CU receives a data packet whose RLC SN is equal to Y+1, that is, an RLC SN that is equal to Y is missing. In this case, the CU may determine that a first data packet corresponding to the RLC SN that is equal to Y is lost during transmission through the Uu interface, that is, the transmission of the first data packet fails.

Implementation 3: If not receiving the first data packet in an arrival time range of the first data packet, the DU determines that the transmission of the first data packet fails.

For example, for a periodic service, the DU may determine an arrival time range corresponding to each data packet. The arrival time range corresponding to each data packet may be understood as a time range in which each data packet should arrive. If not receiving the first data packet in the arrival time range corresponding to the first data packet, the DU may determine that the first data packet is lost during transmission through the Uu interface. The DU may determine, based on service assistance information indicated by a core network device, the arrival time range corresponding to each data packet. The service assistance information may include an arrival periodicity of a plurality of data packets and arrival time of the 1^{st} data packet in the plurality of data packets, and optionally may further include one or more of the following: a data packet latency jitter, and an RLC SN of the 1^{st} data packet. Alternatively, the terminal device may report the service assistance information to the DU.

The following describes a possible implementation in which the DU sends the first information to the terminal device in step 702.

In a possible implementation, the DU may send MAC layer control signaling or PHY layer control signaling to the terminal device, where the MAC layer control signaling or the PHY layer control signaling includes the first information.

For example, when the first information is sent by using the PHY layer control signaling, the PHY layer control signaling may be the 1^{st} piece of DCI to the K^{th} piece of DCI used to schedule retransmissions of the first data packet, and K is an integer greater than or equal to 1. For example, the 1^{st} piece of DCI may include the first information. If a value of K is 1, after receiving the 1^{st} piece of DCI sent by the DU for the first data packet (to be specific, receiving one piece of DCI for scheduling a retransmission), the terminal device may send the P data packets in the second transmission manner. If a value of K is greater than 1, after receiving the 1^{st} piece of DCI to the K^{th} piece of DCI that are sent by the network device for the first data packet (to be specific, receiving K pieces of DCI for scheduling retransmissions), the terminal device may send the P data packets in the second transmission manner. A specific value of K may be set by a person skilled in the art based on an actual requirement.

For example, the first information may include at least one of the following: (1) a quantity of logical channels corresponding to the second transmission manner; (2) an identifier or an index of a logical channel corresponding to the second transmission manner; (3) a second transmission parameter of a logical channel corresponding to the second transmission manner or an index of the second transmission parameter; (4) an RLC SN of the first data packet; (5) a value of P; (6) duration of a second time period, where the P data packets are data packets sent in the second time period; and (7) an index of the second transmission manner. (1), (2), and (3) are specific manners of improving transmission reliability. In this embodiment of this application, when the first information does not include (1), (2), and (3), the terminal device may determine a specific manner of improving transmission reliability.

(1), (2) and (3) are described below. In this embodiment of this application, a DRB used to transmit the P data packets may be associated with W logical channels, and W is an integer greater than or equal to 1.

In an example, the first transmission manner may correspond to M logical channels in the W logical channels, the second transmission manner may correspond to N logical channels in the W logical channels, M and N are integers greater than or equal to 1, and N is greater than M. Therefore, the quantity of logical channels corresponding to the second transmission manner in (1) may be N.

In another example, the first transmission manner may correspond to a first logical channel in the W logical channels, the second transmission manner may correspond to a second logical channel in the W logical channels, and transmission reliability corresponding to the first logical channel is less than transmission reliability corresponding to the second logical channel. Therefore, the identifier of the logical channel corresponding to the second transmission manner in (2) may be an identifier or an index of the second logical channel.

For example, the W logical channels are a logical channel 1 to a logical channel 4. In this case, two bits may be used as indexes of the W logical channels. For example, when a value of the two bits is 00, the logical channel 1 is represented; when a value of the two bits is 01, the logical channel 2 is represented; and so on. In this way, (2) may be 00, 01, 10, or 11. For another example, one or more logical channels corresponding to the second transmission manner may be preset. For example, the logical channel 3 and the logical channel 4 corresponding to the second transmission manner are preset. In this case, one bit may be used as the index of the logical channel corresponding to the second transmission manner. For example, when a value of the bit is 0, the logical channel 3 is represented; when a value of the bit is 1, the logical channel 4 is represented. In this way, (2) may be 0 or 1. In this manner, when the first information includes the index of the second logical channel, a quantity of required bits is relatively small, so that resource overheads can be effectively reduced.

In still another example, the W logical channels include a third logical channel, the first transmission manner corresponds to a first transmission parameter of the third logical channel, and the second transmission manner corresponds to a second transmission parameter of the third logical channel. Therefore, the second transmission parameter of the logical channel corresponding to the second transmission manner in (3) may be the second transmission parameter of the third logical channel or an index of the second transmission parameter.

For (7), in this embodiment of this application, a plurality of transmission manners may be preset, and the plurality of transmission manners may have corresponding indexes. For example, two transmission manners, namely, the first transmission manner and the second transmission manner, are preset, and indexes of the first transmission manner and the second transmission manner may be one bit. When a value of the bit is 0, the first transmission manner is represented; when a value of the bit is 1, the second transmission manner is represented. In this way, (7) may be 0 or 1. It should be noted that, in an alternative manner, if the first transmission manner and the second transmission manner are preset, one bit may alternatively be used to indicate whether to perform switching to a transmission manner. For example, when a value of the bit is 0, it indicates that switching to the first transmission manner needs to be performed; when the value of the bit is 1, it indicates that switching to the second transmission manner needs to be performed.

It can be learned from the foregoing description that, in an example, the first information may include one of (1), (2), (3), and (7), may further include one of (5) and (6), and may further include (4).

It should be noted that in the foregoing case, the DU determines that the transmission of the first data packet fails, and sends the first information to the terminal device. In another possible embodiment, the CU may also determine that the transmission of the first data packet fails, and send second information to the DU by using an F1-U interface message, where the second information is used to indicate the DU to improve transmission reliability corresponding to the terminal device. After receiving the second information, the DU may send the first information to the terminal device.

The second information may include at least one of the following: (1) a quantity of logical channels corresponding to the second transmission manner; (2) an identifier or an index of a logical channel corresponding to the second transmission manner; (3) a second transmission parameter of a logical channel corresponding to the second transmission manner; (4) a PDCP SN and/or an NR-U SN of the first data packet; (5) a value of P; (6) duration of a second time period, where the P data packets are data packets sent in the second time period; and (7) an index of the second transmission manner.

In another possible embodiment, after determining that the transmission of the first data packet fails, the CU may also notify a CU-CP entity, so that the CU-CP entity reconfigures transmission reliability that corresponds to a DRB used to transmit the P data packets, where transmission reliability after the reconfiguration is greater than transmission reliability before the reconfiguration. The terminal device may then send the P data packets on a DRB after the reconfiguration. There may be a plurality of specific implementations of the reconfiguration. For example, a transmission parameter of a logical channel associated with the DRB is adjusted by using RRC signaling.

### Case 6

In Case 6, the foregoing method is applicable to the network architecture shown in FIG. 2. The first communication apparatus is a first network device, and the second communication apparatus is a second network device. A terminal device is connected to the first network device and the second network device in a dual connectivity manner. The first data packet and the P data packets after the first data packet may be data packets transmitted on a downlink.

An implementation in which the first network device determines that the transmission of the first data packet fails in step 701 may include an implementation in which the CU determines that the transmission of the first data packet fails in Case 1, and an implementation in which the DU determines that the transmission of the first data packet fails in Case 2.

The first information in step 702 may include a tunnel address identifier between the first network device and a UPF entity, and/or a tunnel address identifier between the second network device and a UPF entity. For example, the first information may further include at least one of the following: (1) a quantity of logical channels corresponding to the second transmission manner; (2) an identifier or an index of a logical channel corresponding to the second transmission manner; (3) a second transmission parameter of a logical channel corresponding to the second transmission manner; (4) a GTP-U SN of the first data packet; (5) a value of P; (6) duration of a second time period, where the P data packets are data packets sent in the second time period; and (7) an index of the second transmission manner.

In an example, the first information includes the tunnel address identifier between the second network device and the UPF entity and the GTP-U SN corresponding to the first data packet. Correspondingly, after the second network device receives the first information, transmission reliability of the P data packets received from a tunnel indicated by the tunnel address identifier may be improved. A specific manner of improving the transmission reliability may be indicated by the first network device to the second network device by using the first information (where, for example, the first information includes the quantity of logical channels corresponding to the second transmission manner) or may be determined by the second network device. This is not specifically limited.

### Case 7

In Case 7, the foregoing method is applicable to the network architecture shown in FIG. 3. The first communication apparatus is a first terminal device, and the second communication apparatus is a second terminal device. A first data packet and P data packets after the first data packet may be data packets transmitted on a sidelink.

An implementation in which the first terminal device determines that the transmission of the first data packet fails in step 701 may be the same as a part (to be specific, a manner in which the first communication apparatus is the first terminal device, and the second communication apparatus is the second terminal device) of the manner described in the Case 3.

In step 702, information sent by the first terminal device to the second terminal device may include at least one of the following: (1) a quantity of logical channels corresponding to the second transmission manner; (2) an identifier or an index of a logical channel corresponding to the second transmission manner; (3) a second transmission parameter of a logical channel corresponding to the second transmission manner; (4) an RLC SN or a PDCP SN of the first data packet; (5) a value of P; (6) duration of a second time period, where the P data packets are data packets sent in the second time period; and (7) an index of the second transmission manner.

A specific manner of improving transmission reliability may be indicated by the first terminal device to the second terminal device by using the first information or may be determined by the second terminal device. This is not specifically limited.

According to the method described in Embodiment 2, after determining that the transmission of the first data packet fails, the first communication apparatus may indicate the second communication apparatus to improve transmission reliability of the P data packets after the first data packet, so as to effectively ensure that transmission of the P data packets succeeds and avoid service interruption. In addition, a problem of resource overheads caused by transmitting all data packets with very high reliability is alleviated.

It should be noted that, when Case 1 to Case 7 are described, differences between different cases are described, and other content except the differences may be cross-referenced between the different cases.

The foregoing mainly describes the solutions provided in the embodiments of this application from a perspective of a communication apparatus. It may be understood that, to implement the foregoing functions, the communication apparatus may include a corresponding hardware structure and/or software module for performing each function. A person skilled in the art should be easily aware that, in combination with units and algorithm steps of the examples described in the embodiments disclosed in this specification, the embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions of each particular application, but it should not be considered that the implementation goes beyond the scope of this application.

In the embodiments of this application, the communication apparatus may be divided into functional units based on the foregoing method example. For example, each functional unit may be obtained through division based on each corresponding function, or two or more functions may be integrated into one unit. The integrated unit may be implemented in a form of hardware, or may be implemented in a form of a software functional unit.

When the integrated unit is used, FIG. 8 is a block diagram of a possible example of an apparatus according to an embodiment of this application. As shown in FIG. 8, the apparatus 800 includes a processing unit 802 and a communication unit 803. The processing unit 802 is configured to control and manage an action of the apparatus 800. The communication unit 803 is configured to support communication between the apparatus 800 and another device. Optionally, the communication unit 803 is also referred to as a transceiver unit, and may include a receiving unit and/or a sending unit, configured to respectively perform a receiving operation and a sending operation. The apparatus 800 may further include a storage unit 801, configured to store program code and/or data of the apparatus 800.

The apparatus 800 may be the CU in Case 1 in Embodiment 1, or may be a chip disposed in the CU. The processing unit 802 may support the apparatus 800 in performing an action of the CU in Case 1. Alternatively, the processing unit 802 mainly performs an internal action of the CU in the method example in Case 1, and the communication unit 803 may support communication between the apparatus 800 and another communication apparatus.

Specifically, in an embodiment, the processing unit 802 is configured to determine that transmission of a first data packet fails, and the communication unit 803 is configured to send P data packets after the first data packet in a second transmission manner, where P is an integer greater than or equal to 1; and transmission reliability corresponding to the second transmission manner is greater than transmission reliability corresponding to a first transmission manner, and the first transmission manner is used by the CU to send the first data packet.

In a possible design, the processing unit 802 may determine, in any one of the following manners in combination with the communication unit 803, that the transmission of the first data packet fails. For example, in Manner 1, the communication unit 803 receives a second data packet from a user plane function UPF entity at a first moment, and if the communication unit 803 does not receive the first data packet within a first time period after the first moment, the processing unit 802 determines that the transmission of the first data packet fails, where a first sequence number of the second data packet is adjacent to a first sequence number of the first data packet. In Manner 2, if determining that a first sequence number of a data packet received from a UPF entity is missing and the missing first sequence number corresponds to the first data packet, the processing unit 802 determines that the transmission of the first data packet fails. In Manner 3, if the communication unit 803 does not receive the first data packet in an arrival time range of the first data packet, the processing unit 802 determines that the transmission of the first data packet fails. In Manner 4, the communication unit 803 sends the first data packet in the first transmission manner, and if the communication unit 803 receives first feedback information sent by a terminal device, the processing unit 802 determines that the transmission of the first data packet fails, where the first feedback information is used to indicate that the transmission of the first data packet fails. In Manner 5, the communication unit 803 sends the first data packet in the first transmission manner, and if the communication unit 803 receives indication information sent by a DU connected to the CU, the processing unit 802 determines that the transmission of the first data packet fails, where the indication information is used to indicate that the transmission of the first data packet fails.

In a possible design, the first feedback information is feedback information from a PDCP layer.

In a possible design, a DRB used to transmit the P data packets is associated with W logical channels, and W is an integer greater than or equal to 2. For example, the first transmission manner corresponds to M logical channels in the W logical channels, the second transmission manner corresponds to N logical channels in the W logical channels, M and N are integers greater than or equal to 1, and N is greater than M. In this case, the communication unit 803 may send the P data packets through the N logical channels. For another example, the first transmission manner corresponds to a first logical channel in the W logical channels, and the second transmission manner corresponds to a second logical channel in the W logical channels. In this case, the communication unit 803 may send the P data packets through the second logical channel.

The apparatus 800 may be the DU in Case 2 in Embodiment 1, or may be a chip disposed in the DU. The processing unit 802 may support the apparatus 800 in performing an action of the DU in Case 2. Alternatively, the processing unit 802 mainly performs an internal action of the DU in the method example in Case 2, and the communication unit 803 may support communication between the apparatus 800 and another communication apparatus.

Specifically, in an embodiment, the processing unit 802 is configured to determine that transmission of a first data packet fails, and the communication unit 803 is configured to send P data packets after the first data packet in a second transmission manner, where P is an integer greater than or equal to 1; and transmission reliability corresponding to the second transmission manner is greater than transmission reliability corresponding to a first transmission manner, and the first transmission manner is used by the DU to send the first data packet.

In a possible design, the processing unit 802 may determine, in the following manner in combination with the communication unit 803, that the transmission of the first data packet fails: The communication unit 803 sends the first data packet in the first transmission manner, and if the communication unit 803 receives second feedback information sent by a terminal device, the processing unit 802 determines that the transmission of the first data packet fails, where the second feedback information is used to indicate that the transmission of the first data packet fails.

In a possible design, the second feedback information is feedback information from an RLC layer or HARQ feedback information.

In a possible design, the first transmission manner corresponds to a first transmission parameter, and the second transmission manner corresponds to a second transmission parameter. The communication unit 803 may send the P data packets by using the second transmission parameter.

The apparatus 800 may be the first terminal device in Case 3 in Embodiment 1, or may be a chip disposed in the first terminal device. The processing unit 802 may support the apparatus 800 in performing an action of the first terminal device in Case 3. Alternatively, the processing unit 802 mainly performs an internal action of the first terminal device in the method example in Case 3, and the communication unit 803 may support communication between the apparatus 800 and another communication apparatus.

Specifically, in an embodiment, the processing unit 802 is configured to determine that transmission of a first data packet fails, and the communication unit 803 is configured to send P data packets after the first data packet in a second transmission manner, where P is an integer greater than or equal to 1; and transmission reliability corresponding to the second transmission manner is greater than transmission reliability corresponding to a first transmission manner, and the first transmission manner is used by the first terminal device to send the first data packet.

In a possible design, the processing unit 802 may determine, in any one of the following manners in combination with the communication unit 803, that the transmission of the first data packet fails. For example, in Manner 1, the first terminal device sends the first data packet in the first transmission manner, and if the communication unit 803 receives third feedback information sent by a second communication apparatus, the processing unit 802 determines that the transmission of the first data packet fails, where the third feedback information is used to indicate that the transmission of the first data packet fails. In Manner 2, the first terminal device sends the first data packet in the first transmission manner, and if the communication unit 803 does not receive, within a third time period, fourth feedback information sent by a second communication apparatus, the processing unit 802 determines that the transmission of the first data packet fails, where the fourth feedback information is used to indicate that the transmission of the first data packet succeeds. In Manner 3, the first terminal device sends the first data packet in the first transmission manner, and if the communication unit 803 receives the 1^{st} piece of downlink control information DCI to the K^{th} piece of DCI that are sent by a second communication apparatus, the processing unit 802 determines that the transmission of the first data packet fails, where the 1^{st} piece of DCI to the K^{th} piece of DCI are used to schedule the first data packet, and K is an integer greater than or equal to 1.

In a possible design, the third feedback information or the fourth feedback information is feedback information from a PDCP layer, feedback information from an RLC layer, or HARQ feedback information.

In a possible design, the second communication apparatus is a network device, or the second communication apparatus is a second terminal device.

In a possible design, a DRB used to transmit the P data packets is associated with W logical channels, and W is an integer greater than or equal to 1. For example, the first transmission manner corresponds to M logical channels in the W logical channels, the second transmission manner corresponds to N logical channels in the W logical channels, M and N are integers greater than or equal to 1, and N is greater than M. In this case, the communication unit 803 may send the P data packets through the N logical channels. For another example, the first transmission manner corresponds to a first logical channel in the W logical channels, and the second transmission manner corresponds to a second logical channel in the W logical channels. In this case, the communication unit 803 sends the P data packets through the second logical channel. For another example, the W logical channels include a third logical channel, the first transmission manner corresponds to a first transmission parameter of the third logical channel, and the second transmission manner corresponds to a second transmission parameter of the third logical channel. In this case, the communication unit 803 may send the P data packets by using the second transmission parameter of the third logical channel.

The apparatus 800 may be the CU in Case 4 in Embodiment 2, or may be a chip disposed in the CU. The processing unit 802 may support the apparatus 800 in performing an action of the CU in Case 4. Alternatively, the processing unit 802 mainly performs an internal action of the CU in the method example in Case 4, and the communication unit 803 may support communication between the apparatus 800 and another communication apparatus.

Specifically, in an embodiment, the processing unit 802 is configured to determine that transmission of a first data packet fails, and the communication unit 803 is configured to send first information to a DU, where the first information is used to indicate to send P data packets after the first data packet in a second transmission manner; and transmission reliability corresponding to the second transmission manner is greater than transmission reliability corresponding to a first transmission manner, and the first transmission manner is used by a second communication apparatus to send the first data packet.

In a possible design, the first information includes at least one of the following: a second transmission parameter corresponding to the second transmission manner or an index of the second transmission parameter; a second sequence number and/or a third sequence number of the first data packet; a value of P; and duration of a second time period, where the P data packets are data packets sent in the second time period.

In a possible design, the P data packets include a third data packet, the first information includes indication information corresponding to the third data packet, and the indication information corresponding to the third data packet is used to indicate to send the third data packet in the second transmission manner. That the CU sends the first information to the DU includes: The CU sends the third data packet to the DU, where the third data packet includes the indication information corresponding to the third data packet.

In a possible design, the indication information corresponding to the third data packet includes the second transmission parameter corresponding to the second transmission manner or the index of the second transmission parameter.

The apparatus 800 may be the DU in Case 5 in Embodiment 2, or may be a chip disposed in the DU. The processing unit 802 may support the apparatus 800 in performing an action of the DU in Case 5. Alternatively, the processing unit 802 mainly performs an internal action of the DU in the method example in Case 5, and the communication unit 803 may support communication between the apparatus 800 and another communication apparatus.

Specifically, in an embodiment, the processing unit 802 is configured to determine that transmission of a first data packet fails, and the communication unit 803 is configured to send first information to a terminal device, where the first information is used to indicate to send P data packets after the first data packet in a second transmission manner; and transmission reliability corresponding to the second transmission manner is greater than transmission reliability corresponding to a first transmission manner, and the first transmission manner is used by a second communication apparatus to send the first data packet.

In a possible design, the processing unit 802 may determine, in any one of the following manners in combination with the communication unit 803, that the transmission of the first data packet fails. For example, in Manner 1, the communication unit 803 receives a second data packet from the terminal device at a first moment, and if the communication unit 803 does not receive the first data packet within a first time period after the first moment, the processing unit 802 determines that the transmission of the first data packet fails, where a fourth sequence number of the second data packet is adjacent to a fourth sequence number of the first data packet, and the fourth sequence number of the second data packet is less than the fourth sequence number of the first data packet. In Manner 2, if determining that a fourth sequence number of a data packet received from the terminal device is missing and the missing fourth sequence number corresponds to the first data packet, the processing unit 802 determines that the transmission of the first data packet fails. In Manner 3, if the communication unit 803 does not receive the first data packet in an arrival time range of the first data packet, the processing unit 802 determines that the transmission of the first data packet fails.

In a possible design, the first information includes at least one of the following: a quantity of logical channels corresponding to the second transmission manner; an identifier of a logical channel corresponding to the second transmission manner; a second transmission parameter of a logical channel corresponding to the second transmission manner or an index of the second transmission parameter; a fourth sequence number of the first data packet; a value of P; and duration of a second time period, where the P data packets are data packets sent in the second time period.

In a possible design, the communication unit 803 is specifically configured to send physical layer control signaling or media access control MAC layer control signaling to the terminal device, where the physical layer control signaling or the MAC layer control signaling includes the first information.

In a possible design, the physical layer control signaling is the 1^{st} piece of DCI to the K^{th} piece of DCI used to schedule a retransmission of the first data packet, where K is an integer greater than or equal to 1.

The apparatus 800 may be the first network device in Case 6 in Embodiment 2, or may be a chip disposed in the first network device. In this case, for specific implementations of the processing unit 802 and the communication unit 803, refer to the foregoing method examples. Details are not described herein again.

The apparatus 800 may be the first terminal device in Case 7 in Embodiment 2, or may be a chip disposed in the first terminal device. In this case, for specific implementations of the processing unit 802 and the communication unit 803, refer to the foregoing method examples. Details are not described herein again.

It should be understood that division of units in the foregoing apparatus is merely division of logical functions. In actual implementation, all or some of units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be an independently disposed processing element, or may be integrated into a chip of the apparatuses for implementation. Alternatively, each unit may be stored in a memory in a form of a program to be invoked by a processing element of the apparatuses to perform a function of the unit. In addition, all or some of the units may be integrated together, or may be implemented independently. The processing element herein may also be referred to as a processor, and may be an integrated circuit having a signal processing capability. In an implementation process, the steps or the foregoing units in the foregoing methods may be implemented by using a hardware integrated logic circuit in the processing element, or may be implemented in a form of software invoked by the processing element.

For example, a unit in any one of the foregoing apparatuses may be one or more integrated circuits, for example, one or more application-specific integrated circuits (Application-Specific Integrated Circuits, ASICs), one or more microprocessors (digital signal processors, DSPs), or one or more field programmable gate arrays (Field Programmable Gate Arrays, FPGAs), or a combination of at least two of these types of integrated circuits, configured to implement the foregoing method. For another example, when a unit in the apparatuses is implemented in a form of a program invoked by the processing element, the processing element may be a general-purpose processor, for example, a central processing unit (Central Processing Unit, CPU), or another processor that can invoke the program. For still another example, the units may be integrated and implemented in a form of a system-on-a-chip (system-on-a-chip, SoC).

The foregoing receiving unit is an interface circuit of the apparatus, and is configured to receive a signal from another apparatus. For example, when the apparatus is implemented in a form of a chip, the receiving unit is an interface circuit that is of the chip and that is configured to receive a signal from another chip or apparatus. The foregoing sending unit is an interface circuit of the apparatus, and is configured to send a signal to another apparatus. For example, when the apparatus is implemented in a form of a chip, the sending unit is an interface circuit that is of the chip and that is configured to send a signal to another chip or apparatus.

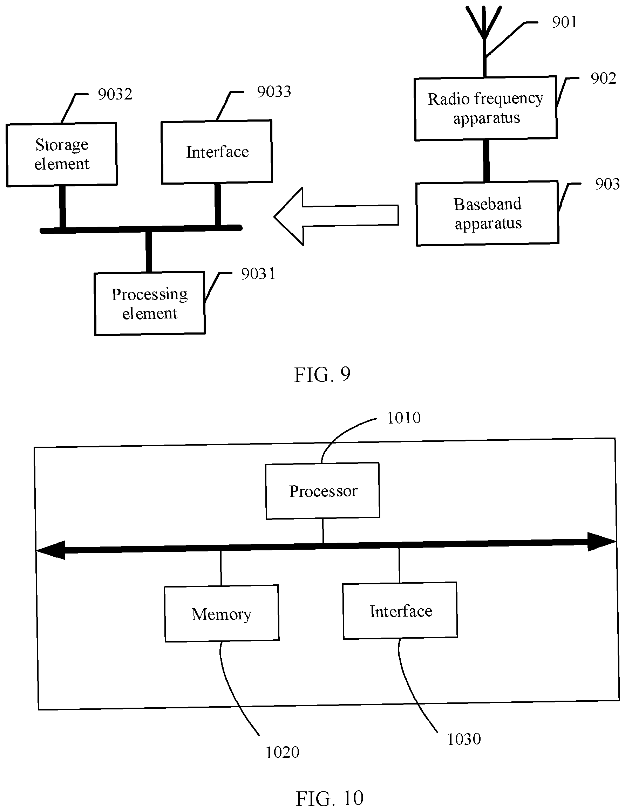

FIG. 9 is a schematic diagram of a structure of a network device according to an embodiment of this application, and is configured to implement operations of the network device (for example, a DU) in the foregoing embodiments. As shown in FIG. 9, the network device includes an antenna 901, a radio frequency apparatus 902, and a baseband apparatus 903. The antenna 901 is connected to the radio frequency apparatus 902. In an uplink direction, the radio frequency apparatus 902 receives, through the antenna 901, information sent by a terminal device, and sends, to the baseband apparatus 903 for processing, the information sent by the terminal device. In a downlink direction, the baseband apparatus 903 processes the information about the terminal device and sends processed information to the radio frequency apparatus 902. The radio frequency apparatus 902 processes the information about the terminal device and then sends processed information to the terminal device through the antenna 901.

The baseband apparatus 903 may include one or more processing elements 9031, for example, include one main control CPU and another integrated circuit. In addition, the baseband apparatus 903 may further include a storage element 9032 and an interface 9033. The storage element 9032 is configured to store a program and data. The interface 9033 is configured to exchange information with the radio frequency apparatus 902, and the interface is, for example, a common public radio interface (common public radio interface, CPRI). The foregoing apparatus used in the network device may be located in the baseband apparatus 903. For example, the foregoing apparatus used in the network device may be a chip in the baseband apparatus 903. The chip includes at least one processing element and an interface circuit. The processing element is configured to perform the steps of any method performed by the network device. The interface circuit is configured to communicate with another apparatus. In an implementation, units, in the network device, for implementing the steps in the foregoing methods may be implemented by scheduling a program by the processing element. For example, the apparatus used in the network device includes a processing element and a storage element. The processing element invokes a program stored in the storage element, to perform the methods performed by the network device in the foregoing method embodiments. The storage element may be a storage element, namely, an on-chip storage element, located on a same chip as the processing element, or may be a storage element, namely, an off-chip storage element, located on a different chip from the processing element.

In another implementation, units, in the network device, for implementing the steps in the foregoing methods may be configured as one or more processing elements. The processing elements are disposed on the baseband apparatus. The one or more processing elements herein may be one or more integrated circuits, for example, one or more ASICs, one or more DSPs, or one or more FPGAs, or a combination of these types of integrated circuits. The integrated circuits may be integrated together to form a chip.

The units, in the network device, for implementing the steps in the foregoing methods may be integrated together, and implemented in a form of a system-on-a-chip (system-on-a-chip, SoC). For example, the baseband apparatus includes the SoC chip, configured to implement the foregoing methods. At least one processing element and storage element may be integrated into the chip, and a processing element invokes a program stored in a storage element to implement the foregoing methods performed by the network device. Alternatively, at least one integrated circuit may be integrated into the chip, to implement the foregoing methods performed by the network device. Alternatively, with reference to the foregoing implementations, functions of some units may be implemented by invoking a program by the processing element, and functions of some units may be implemented by the integrated circuit.

It can be learned that the foregoing apparatus used in the network device may include at least one processing element and an interface circuit. The at least one processing element is configured to perform any method performed by the network device provided in the foregoing method embodiments. The processing element may perform some or all steps performed by the network device, in a first manner, to be specific, by invoking the program stored in the storage element; or may perform some or all steps performed by the network device, in a second manner, to be specific, by using a hardware integrated logic circuit in the processor element in combination with instructions; or may certainly perform, by combining the first manner and the second manner, some or all steps performed by the network device.

As described above, the processing element herein may be a general-purpose processor, for example, a CPU, or may be one or more integrated circuits, for example, one or more ASICs, one or more microprocessors DSPs, or one or more FPGAs, or a combination of at least two of these types of integrated circuits, configured to implement the foregoing methods.

The storage element may be one memory, or may be a general term of a plurality of storage elements.

FIG. 10 is a schematic diagram of a structure of another network device according to an embodiment of this application, and is configured to implement operations of the network device (for example, a CU) in the foregoing embodiments.

As shown in FIG. 2, the network device includes a processor 1010, a memory 1020, and an interface 1030. The processor 1010, the memory 1020, and the interface 1030 are signal-connected.

The apparatus is located in the network device, and a function of each unit may be implemented by the processor 1010 by invoking a program stored in the memory 1020. That is, the foregoing apparatus includes a memory and a processor. The memory is configured to store a program, and the program is invoked by the processor to perform the methods in the foregoing method embodiments. The processor herein may be an integrated circuit having a signal processing capability, for example, a CPU. Alternatively, a function of each unit may be implemented by one or more integrated circuits, for example, one or more ASICs, one or more microprocessors DSPs, or one or more FPGAs, or a combination of at least two of these types of integrated circuits, configured to implement the foregoing methods. Alternatively, the foregoing implementations may be combined.

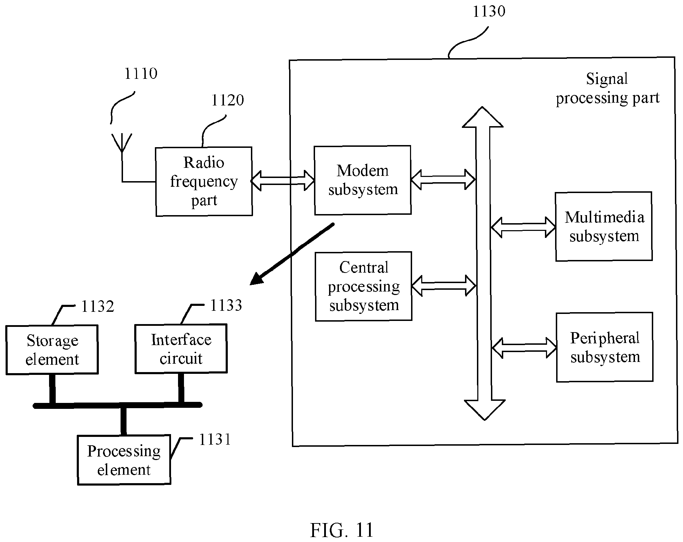

FIG. 11 is a schematic diagram of a structure of a terminal device according to an embodiment of this application. The terminal device may be the terminal device in the foregoing embodiments, and is configured to implement operations of the terminal device in the foregoing embodiments. As shown in FIG. 11, the terminal device includes an antenna 1110, a radio frequency part 1120, and a signal processing part 1130. The antenna 1110 is connected to the radio frequency part 1120. In a downlink direction, the radio frequency part 1120 receives, through the antenna 1110, information sent by a network device, and sends, to the signal processing part 1130 for processing, the information sent by the network device. In an uplink direction, the signal processing part 1130 processes information about the terminal device, and sends processed information to the radio frequency part 1120. The radio frequency part 1120 processes the information about the terminal device, and then sends processed information to the network device through the antenna 1110.

The signal processing part 1130 may include a modem subsystem, configured to process data on each communication protocol layer. The signal processing part 1130 may further include a central processing subsystem, configured to implement processing on an operating system and an application layer of the terminal device. In addition, the signal processing part 1130 may further include another subsystem, for example, a multimedia subsystem or a peripheral subsystem. The multimedia subsystem is configured to control a camera or display of a screen of the terminal device, and the peripheral subsystem is configured to implement a connection to another device. The modem subsystem may be a separately disposed chip. Optionally, the foregoing apparatus used in the terminal device may be located in the modem subsystem.

The modem subsystem may include one or more processing elements 1131, for example, include one main control CPU and another integrated circuit. In addition, the modem subsystem may further include a storage element 1132 and an interface circuit 1133. The storage element 1132 is configured to store data and a program. However, a program used to perform the method performed by the terminal device in the foregoing methods may not be stored in the storage element 1132, but is stored in a memory outside the modem subsystem, and is loaded and used by the modem subsystem when to be used. The interface circuit 1133 is configured to communicate with another subsystem. The foregoing apparatus used in the terminal device may be located in the modem subsystem. The modem subsystem may be implemented by using a chip. The chip includes at least one processing element and an interface circuit. The processing element is configured to perform the steps of any method performed by the terminal device. The interface circuit is configured to communicate with another apparatus. In an implementation, units, in the terminal device, for implementing the steps in the foregoing methods may be implemented by scheduling a program by the processing element. For example, the apparatus used in the terminal device includes a processing element and a storage element. The processing element invokes a program stored in the storage element, to perform the methods performed by the terminal device in the foregoing method embodiments. The storage element may be a storage element, namely, an on-chip storage element, that is on a same chip as the processing unit.

In another implementation, a program used to perform the methods performed by the terminal device in the foregoing methods may be in a storage element, namely, an off-chip storage element, located on a different chip from the processing element. In this case, the processing element invokes or loads the program from the off-chip storage element to an on-chip storage element, to invoke and perform the methods performed by the terminal device in the foregoing method embodiments.

In still another implementation, units, in the terminal device, for implementing the steps in the foregoing methods may be configured as one or more processing elements. The processing elements are disposed in the modem subsystem. The one or more processing elements herein may be one or more integrated circuits, for example, one or more ASICs, one or more DSPs, or one or more FPGAs, or a combination of these types of integrated circuits. The integrated circuits may be integrated together to form a chip.

The units, in the terminal device, for implementing the steps in the foregoing methods may be integrated together, and implemented in a form of a system-on-a-chip (system-on-a-chip, SoC). The SoC chip is configured to implement the foregoing methods. At least one processing element and storage element may be integrated into the chip, and a processing element invokes a program stored in a storage element to implement the foregoing methods performed by the terminal device. Alternatively, at least one integrated circuit may be integrated into the chip, to implement the foregoing methods performed by the terminal device. Alternatively, with reference to the foregoing implementations, functions of some units may be implemented by invoking a program by the processing element, and functions of some units may be implemented by the integrated circuit.

It can be learned that the foregoing apparatus used in the terminal device may include at least one processing element and an interface circuit. The at least one processing element is configured to perform any method performed by the terminal device provided in the foregoing method embodiments. The processing element may perform some or all steps performed by the terminal device, in a first manner, to be specific, by invoking the program stored in the storage element; or may perform some or all steps performed by the terminal device, in a second manner, to be specific, by using a hardware integrated logic circuit in the processor element in combination with instructions; or may certainly perform, by combining the first manner and the second manner, some or all steps performed by the terminal device.

As described above, the processing element herein may be a general-purpose processor, for example, a CPU, or may be one or more integrated circuits, for example, one or more ASICs, one or more microprocessors DSPs, or one or more FPGAs, or a combination of at least two of these types of integrated circuits, configured to implement the foregoing methods.

The storage element may be one memory, or may be a general term of a plurality of storage elements.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of the claims of this application and their equivalent technologies.

## Claims

1. A data transmission method, wherein the method comprises:
determining, by a first communication apparatus, that transmission of a first data packet fails; and
sending, by the first communication apparatus, P data packets after the first data packet in a second transmission manner, wherein P is an integer greater than or equal to 1, wherein
transmission reliability corresponding to the second transmission manner is greater than transmission reliability corresponding to a first transmission manner, and the first transmission manner is used by the first communication apparatus to send the first data packet.

2. The method according to claim 1, wherein the first communication apparatus is a centralized unit CU.

3. The method according to claim 2, wherein the determining, by a first communication apparatus, that transmission of a first data packet fails comprises:
receiving, by the CU, a second data packet from a user plane function UPF entity at a first moment, and if not receiving the first data packet within a first time period after the first moment, determining that the transmission of the first data packet fails, wherein a first sequence number of the second data packet is adjacent to a first sequence number of the first data packet;
if determining that a first sequence number of a data packet received from a UPF entity is missing and the missing first sequence number corresponds to the first data packet, determining, by the CU, that the transmission of the first data packet fails;
if not receiving the first data packet in an arrival time range of the first data packet, determining, by the CU, that the transmission of the first data packet fails;
sending, by the CU, the first data packet in the first transmission manner, and if receiving first feedback information sent by a terminal device, determining that the transmission of the first data packet fails, wherein the first feedback information is used to indicate that the transmission of the first data packet fails; or
sending, by the CU, the first data packet in the first transmission manner, and if receiving indication information sent by a distributed unit DU connected to the CU, determining that the transmission of the first data packet fails, wherein the indication information is used to indicate that the transmission of the first data packet fails.

4. The method according to claim 3, wherein
the first feedback information is feedback information from a packet data convergence protocol PDCP layer.

5. The method according to any one of claims 2 to 4, wherein a data radio bearer DRB used to transmit the P data packets is associated with W logical channels, and W is an integer greater than or equal to 2; and
the first transmission manner corresponds to M logical channels in the W logical channels, the second transmission manner corresponds to N logical channels in the W logical channels, M and N are integers greater than or equal to 1, and N is greater than M; and the sending, by the first communication apparatus, P data packets after the first data packet in a second transmission manner comprises: sending, by the CU, the P data packets through the N logical channels; or
the first transmission manner corresponds to a first logical channel in the W logical channels, and the second transmission manner corresponds to a second logical channel in the W logical channels; and the sending, by the first communication apparatus, P data packets after the first data packet in a second transmission manner comprises:
sending, by the CU, the P data packets through the second logical channel.

6. The method according to claim 1, wherein the first communication apparatus is a distributed unit DU.

7. The method according to claim 6, wherein the determining, by a first communication apparatus, that transmission of a first data packet fails comprises:
sending, by the DU, the first data packet in the first transmission manner, and if receiving second feedback information sent by a terminal device, determining that the transmission of the first data packet fails, wherein the second feedback information is used to indicate that the transmission of the first data packet fails.

8. The method according to claim 7, wherein
the second feedback information is feedback information from a radio link control RLC layer or hybrid automatic repeat request HARQ feedback information.

9. The method according to any one of claims 6 to 8, wherein the first transmission manner corresponds to a first transmission parameter, and the second transmission manner corresponds to a second transmission parameter; and
the sending, by the first communication apparatus, P data packets after the first data packet in a second transmission manner comprises: sending, by the DU, the P data packets by using the second transmission parameter.

10. The method according to claim 1, wherein the first communication apparatus is a first terminal device.

11. The method according to claim 10, wherein the determining, by a first communication apparatus, that transmission of a first data packet fails comprises:
sending, by the first terminal device, the first data packet in the first transmission manner, and if receiving third feedback information sent by a second communication apparatus, determining that the transmission of the first data packet fails, wherein the third feedback information is used to indicate that the transmission of the first data packet fails;
sending, by the first terminal device, the first data packet in the first transmission manner, and if not receiving, within a third time period, fourth feedback information sent by a second communication apparatus, determining that the transmission of the first data packet fails, wherein the fourth feedback information is used to indicate that the transmission of the first data packet succeeds; or
sending, by the first terminal device, the first data packet in the first transmission manner, and if receiving the 1^{st} piece of downlink control information DCI to the K^{th} piece of DCI that are sent by a second communication apparatus, determining that the transmission of the first data packet fails, wherein the 1^{st} piece of DCI to the K^{th} piece of DCI are used to schedule the first data packet, and K is an integer greater than or equal to 1.

12. The method according to claim 11, wherein
the third feedback information or the fourth feedback information is feedback information from a PDCP layer, feedback information from an RLC layer, or HARQ feedback information.

13. The method according to claim 11 or 12, wherein
the second communication apparatus is a network device, or the second communication apparatus is a second terminal device.

14. The method according to any one of claims 10 to 13, wherein a DRB used to transmit the P data packets is associated with W logical channels, and W is an integer greater than or equal to 1; and
the first transmission manner corresponds to M logical channels in the W logical channels, the second transmission manner corresponds to N logical channels in the W logical channels, M and N are integers greater than or equal to 1, and N is greater than M; and the sending, by the first communication apparatus, P data packets after the first data packet in a second transmission manner comprises: sending, by the first terminal device, the P data packets through the N logical channels;
the first transmission manner corresponds to a first logical channel in the W logical channels, and the second transmission manner corresponds to a second logical channel in the W logical channels; and the sending, by the first communication apparatus, P data packets after the first data packet in a second transmission manner comprises:
sending, by the first terminal device, the P data packets through the second logical channel; or
the W logical channels comprise a third logical channel, the first transmission manner corresponds to a first transmission parameter of the third logical channel, and the second transmission manner corresponds to a second transmission parameter of the third logical channel; and the sending, by the first communication apparatus, P data packets after the first data packet in a second transmission manner comprises: sending, by the first terminal device, the P data packets by using the second transmission parameter of the third logical channel.

15. The method according to any one of claims 1 to 14, wherein
the P data packets are data packets sent in a second time period.

16. A data transmission method, wherein the method comprises:
determining, by a first communication apparatus, that transmission of a first data packet fails; and
sending, by the first communication apparatus, first information to a second communication apparatus, wherein the first information is used to indicate to send P data packets after the first data packet in a second transmission manner, wherein
transmission reliability corresponding to the second transmission manner is greater than transmission reliability corresponding to a first transmission manner, and the first transmission manner is used by the second communication apparatus to send the first data packet.

17. The method according to claim 16, wherein the first communication apparatus is a CU, and the second communication apparatus is a DU connected to the CU.

18. The method according to claim 17, wherein the determining, by a first communication apparatus, that transmission of a first data packet fails comprises:
receiving, by the CU, a second data packet from a UPF entity at a first moment, and if not receiving the first data packet within a first time period after the first moment, determining that the transmission of the first data packet fails, wherein a first sequence number of the second data packet is adjacent to a first sequence number of the first data packet;
if determining that a first sequence number of a data packet received from a UPF entity is missing and the missing first sequence number corresponds to the first data packet, determining, by the CU, that the transmission of the first data packet fails;
if not receiving the first data packet in an arrival time range of the first data packet, determining, by the CU, that the transmission of the first data packet fails;
sending, by the CU, the first data packet in the first transmission manner, and if receiving first feedback information sent by a terminal device, determining that the transmission of the first data packet fails, wherein the first feedback information is used to indicate that the transmission of the first data packet fails; or
sending, by the CU, the first data packet in the first transmission manner, and if receiving indication information sent by the DU, determining that the transmission of the first data packet fails, wherein the indication information is used to indicate that the transmission of the first data packet fails.

19. The method according to claim 18, wherein
the first feedback information is feedback information from a PDCP or feedback information from an RLC layer.

20. The method according to any one of claims 17 to 19, wherein the first information comprises at least one of the following:
a second transmission parameter corresponding to the second transmission manner or an index of the second transmission parameter;
a second sequence number and/or a third sequence number of the first data packet;
a value of P; or
duration of a second time period, wherein the P data packets are data packets sent in the second time period.

21. The method according to any one of claims 17 to 19, wherein the P data packets comprise a third data packet, the first information comprises indication information corresponding to the third data packet, and the indication information corresponding to the third data packet is used to indicate to send the third data packet in the second transmission manner; and
the sending, by the first communication apparatus, first information to a second communication apparatus comprises:
sending, by the CU, the third data packet to the DU, wherein the third data packet comprises the indication information corresponding to the third data packet.

22. The method according to claim 21, wherein the indication information corresponding to the third data packet comprises a second transmission parameter corresponding to the second transmission manner or an index of the second transmission parameter.

23. The method according to claim 16, wherein the first communication apparatus is a DU, and the second communication apparatus is a terminal device.

24. The method according to claim 23, wherein the determining, by a first communication apparatus, that transmission of a first data packet fails comprises:
receiving, by the DU, a second data packet from the terminal device at a first moment, and if not receiving the first data packet within a first time period after the first moment, determining that the transmission of the first data packet fails, wherein a fourth sequence number of the second data packet is adjacent to a fourth sequence number of the first data packet, and the fourth sequence number of the second data packet is less than the fourth sequence number of the first data packet;
if determining that a fourth sequence number of a data packet received from the terminal device is missing and the missing fourth sequence number corresponds to the first data packet, determining, by the DU, that the transmission of the first data packet fails; or
if not receiving the first data packet in an arrival time range of the first data packet, determining, by the DU, that the transmission of the first data packet fails.

25. The method according to claim 23 or 24, wherein the first information comprises at least one of the following:
a quantity of logical channels corresponding to the second transmission manner;
an identifier of a logical channel corresponding to the second transmission manner;
a second transmission parameter of a logical channel corresponding to the second transmission manner or an index of the second transmission parameter;
the fourth sequence number of the first data packet;
a value of P; and
duration of a second time period, wherein the P data packets are data packets sent in the second time period.

26. The method according to any one of claims 23 to 25, wherein the sending, by the first communication apparatus, first information to a second communication apparatus comprises:
sending, by the DU, physical layer control signaling or media access control MAC layer control signaling to the terminal device, wherein the physical layer control signaling or the MAC layer control signaling comprises the first information.

27. An apparatus, comprising units configured to perform steps of the method according to any one of claims 1 to 26.

28. An apparatus, comprising at least one processor and an interface circuit, wherein the at least one processor is configured to communicate with another apparatus through the interface circuit, and perform the method according to any one of claims 1 to 26.

29. An apparatus, comprising a processor, configured to invoke a program stored in a memory, to perform the method according to any one of claims 1 to 26.

30. A computer-readable storage medium, comprising a program, wherein when the program is run by a processor, the method according to any one of claims 1 to 26 is performed.
